# EUROPEAN PATENT SPECIFICATION

(11) **EP 1 527 505 B1**
(45) Date of publication and mention of the grant of the patent: **30.11.2016**
(21) Application number: 03764360.8
(22) Date of filing: 08.07.2003
(51) Int. Cl.: H02H 3/28

(54) **ELECTRICAL NETWORK PROTECTION SYSTEM**
ELEKTRISCHES NETZSCHUTZSYSTEM
SYSTEME DE PROTECTION DE RESEAU ELECTRIQUE

(30) Priority: 12.07.2002 US 395341 P; 12.07.2002 US 395350 P; 29.07.2002 US 398708 P; 24.03.2003 US 394661; 24.03.2003 US 394660; 24.03.2003 US 394579
(43) Date of publication of application: 04.05.2005
(73) Proprietor: Cooper Technologies Company, Houston, TX 77002 (US)
(72) Inventor: KOJOVIC, Ljubomir, A., Racine, WI 53402 (US); BISHOP, Martin, T., Oak Creek, WI 53154 (US); SKENDZIC, Veselin, Pullman, WA 99163-3351 (US); DAY, Timothy, Robert, Racine, WI 53402 (US)
(74) Representative: Howe, Steven
(86) International application number: PCT/US2003/021123
(87) International publication number: WO 2004/008600

(56) References cited:
- EP-A- 0 494 720
- GB-A- 1 355 827
- US-A- 4 623 949
- US-A1- 2001 029 433

## Description

### TECHNICAL FIELD

This description relates to detection and clearance of faults in an electrical system.

### BACKGROUND

Conventional power systems exist to provide electrical power. In such a power system, faults may occur that are dangerous to users of the system, and that cause damage to the system that may be expensive and/or time-consuming to correct. For example, a power system that experiences a current short-circuit, such as an arc current, may cause a fire or explosion, or otherwise damage itself and related equipment and operators. In particular, very high voltage power systems, such as those that include a high-voltage power transformer, may experience such faults.

When faults are quickly and accurately detected, they may be eliminated by corrective measures, such as an activation of a circuit breaker and, if necessary, subsequent repair of the power system. In this way, damage from the fault may be minimized.

Document US 2001/0029433 A1 discloses an electrical protection system according to the prior art.

### SUMMARY

The invention concerns an electrical protection system comprising the features of claims 1 and a method for protecting an electrical system comprising the features of claims 23.

Implementations may include one or more of the following features. For example, the first protection device may be operable to detect the first fault using a first protection scheme. The first protection scheme may be a differential protection scheme. The second Rogowski coil may define a second protection zone containing a second circuit element, and the first protection device may be operable to implement a second protection scheme to detect a second fault associated with the second circuit element. In this case, the second protection scheme may include an overcurrent protection scheme, and the first protection device may be operable to integrate protection of the first protection zone and the second protection zone. Also, the first protection device may be operable to provide a third protection zone that serves as a back-up protection zone to the first protection zone and the second protection zone.

The first protection device may be a first differential relay. The system may include a first circuit breaker operable to receive a first instruction from the first protection device and interrupt the first current in response to the first instruction, the first Rogowski coil, the second Rogowski coil, the first protection device, and the first circuit breaker may be all associated with a first network unit of an electrical network system. The system may further include a third Rogowski coil positioned to detect a third current and generate a third current measurement, a fourth Rogowski coil positioned to detect a fourth current and generate a fourth current measurement, wherein a second protection zone is defined based on a positioning of the third Rogowski coil and the fourth Rogowski coil, and a second protection device operable to determine from the third current measurement and the fourth current measurement, the existance of a second fault that is associated with a second circuit element within the second protection zone.

In this case, the second protection device may be a second differential relay. A second circuit breaker may be operable to receive a second instruction from the second protection device and interrupt the third current in response to the second instruction. The third Rogowski coil, the fourth Rogowski coil, the second protection device, and the second circuit breaker may be all associated with a second network unit of the electrical network system, and a communications link maybe formed between the first protection device and the second protection device.

In this case, the first network unit and the second network unit may be connected through a bus connection. The first protection device and the second protection device may share the first current measurement, the second current measurement, the third current measurement, and the fourth current measurement over the communications link, and may use the current measurements to determine that a bus fault associated with the bus connection exists.

The second protection device may receive a detection notification through the communications link indicating detection of the first fault by the first protection device. Further, the second protection device may send the second instruction to the second circuit breaker in response to the detection notification. The second protection device may wait a predetermined amount of time after the detection notification before sending the second instruction. In this case, when the second protection device receives, before the predetermined amount of time has elapsed, an operation notification indicating operation of the first circuit breaker in response to the first instruction, the second protection device may not send the second instruction.

When the second protection device does not receive, before the predetermined amount of time has elapsed, an operation notification indicating operation of the first circuit breaker, the second relay may send the second instruction to the second circuit breaker after the predetermined time has elapsed.

The third Rogowski coil, the fourth Rogowski coil, and the second circuit breaker may be connected to the first protection device. In this case, the first protection device may be operable to receive a malfunction notification indicating a malfunction of the second protection device, and the first protection device may be operable to receive the third current measurement and the fourth current measurement and determine that the second fault exists based on the current measurement. Further, the first protection device may be operable to operate the second circuit breaker in response to the second fault.

A third Rogowski coil may be positioned to detect a third current and generate a third current measurement, wherein a second protection zone may be defined based on a positioning of the first Rogowski coil and the third Rogowski coil, and a third protection zone may be defined based on a positioning of the second Rogowski coil and the third Rogowski coil. In this case, the first protection device may be operable to determine from the first current measurement and the third current measurement that a second fault exists that is associated with a second circuit element within the second protection zone.

The first protection device may be operable to determine from the second current measurement and the third current measurement that a third fault exists that is associated with a third circuit element within the third protection zone. The first current may be associated with a first conductor associated with a primary winding of a power transformer, the second current may be associated with a second conductor associated with a secondary winding of the power transformer, and the power transformer may be the first circuit element.

According to another general aspect, an electrical system is protected. A first current through a first conductor in an electrical system is measured using a first Rogowski coil positioned along the first conductor, a first current signal corresponding to the first current is output, a second current through a second conductor in the electrical system is measured using a second Rogowski coil positioned along the second conductor, a second current signal corresponding to the second current is output, and the first current signal and the second current signal are provided to a first protection device.

Implementations may include one or more of the following features. For example, differential protection may be provided to a first circuit element that is positioned within a first protection zone of the electrical system that is defined between the first Rogowski coil and the second Rogowski coil, using the first protection device, and overcurrent protection may be provided to a second circuit element that is positioned within a second protection zone of the electrical system that is defined by a position of the second Rogowski coil, using the first protection device. In this case, back-up protection may be provided within a third protection zone that includes the first protection zone and the second protection zone, using the first protection device.

The first protection device may include a differential relay. The first conductor and the second conductor may be included within a first network unit of the electrical system. Based on the first current signal and the second current signal, it may be determined that a fault associated with the first network unit exists in the electrical system.

A third current through a third conductor in the electrical system may be measured using a third Rogowski coil positioned along the third conductor, a third current signal corresponding to the third current may be output, a fourth current through a fourth conductor in the electrical system may be measured using a fourth Rogowski coil positioned along the fourth conductor, a fourth current signal corresponding to the fourth current may be output, and the third current signal and the fourth current signal may be provided to a second protection device.

The second protection device may include a differential relay. The third conductor and the fourth conductor may be included within a second network unit of the electrical system.

Based on the third current signal and the fourth current signal, it may be determined that a fault associated with the second network unit exists. The first protection device and the second protection device may be connected by a communications link.

The first current signal and the second current signal may be transmitted from the first protection device to the second protection device, and, at the second protection device and based on the first current signal and the second current signal, it may be determined that a fault associated with the first network unit exists.

It may be determined, at the first protection device and based on the first current signal and the second current signal, that a fault exists in the first network unit, and a fault notification indicating the existence of the fault may be transmitted from the first protection device to the second protection device. In this case, a first circuit breaker associated with the first network unit may be opened in response to the fault, and a clearance notification may be transmitted from the first protection device to the second protection device, through the communications link and in response to the opening of the circuit breaker.

A second circuit breaker associated with the second network unit may be opened in response to the fault notification. In response to the clearance notification, electrical power may be routed from the second network unit to the first network unit, through a connection bus connecting the first network unit and the second network unit.

The electrical system may include a connection bus connecting the first network unit to the second network unit, and the connection bus may be connected to the second conductor and the fourth conductor between the first Rogowski coil and the second Rogowski coil.

The first current signal and the second current signal may be transmitted from the first protection device to the second protection device, the third current signal and the fourth current signal may be transmitted from the second protection device to the first protection device, and it may be determined that a fault associated with the connection bus exists, based on the first current signal, the second current signal, the third current signal, and the fourth current signal.

The third current signal may be transmitted from the third Rogowski coil to the first protection device, through a first connection, the fourth current signal may be transmitted from the fourth Rogowski coil to the first protection device, through a second connection, and, at the first protection device and based on the third current signal and the fourth current signal, it may be determined that a fault associated with the second network unit exists.

A third current through a third conductor in the electrical system may be measured using a third Rogowski coil positioned along the third conductor, a third current signal corresponding to the third current may be output, and the third current signal may be input at the first protection device.

It may be determined that a fault exists between the first Rogowski coil and the third Rogowski coil based on the first current signal and the third current signal. It also may be determined that a fault exists between the third Rogowski coil and the second Rogowski coil based on the third current signal and the second current signal.

In an example, an electrical protection system includes a first pair of Rogowski coils operable to generate a first pair of current signals, the first pair of current signals being associated with a first network unit of the electrical system, a second pair of Rogowski coils operable to generate a second pair of current signals, the second pair of current signals being associated with a second network unit of the electrical system, and a first protection device associated with the first network unit and operable to receive and process the first pair of current signals and the second pair of current signals.

Implementations may include one or more of the following features. For example, the first protection device may provide integrated protection to the first network unit, based on at least one of the first pair of current signals, where the integrated protection includes at least a first protection scheme and a second protection scheme.

The first protection device may be operable to determine, based on the first pair of current signals, that a fault associated with the first network unit exists. A second protection device may be associated with the second network unit and operable to input the second pair of current signals. The first protection device may act as a back-up to the second protection device in detecting that a fault associated with the second network unit exists. In this case, the first protection device may receive the second pair of current signals from the second pair of Rogowski coils, or through the second protection device.

The first protection device and the second protection device may be connected to one another through a communications link. A connection bus may connect the first network unit and the second network unit. The first protection device and the second protection device may determines that a bus fault exists in the connection bus, based on the first pair of current signals and the second pair of current signals.

In another example, an electrical protection system includes a first Rogowski coil associated with a primary feeder of an electrical system and operable to sense a primary current in the primary feeder, a first protection device operable to receive a first current signal from the first Rogowski coil, secondary Rogowski coils, each associated with a corresponding secondary feeder of the electrical system and operable to sense a corresponding secondary current in the secondary feeder, secondary protection devices, each operable to receive a secondary current signals from an associated secondary Rogowski coil, and a communication link operable to transmit the first current signal and the secondary current signals between the first protection device and the secondary protection devices.

Implementations may include one or more of the following features. For example, the first protection device and the secondary protection devices may include differential relays. The first protection device may be operable to determine that a fault associated with the electrical system exists based on the first current signal and the secondary current signals.

A connection bus may connect the primary feeder to each of the secondary feeders. The first protection device may be operable to determine that a fault associated with the connection bus exists based on the first current signal and the secondary current signals. The communication link may include peer-to-peer connections between the first protection device and the secondary protection devices, or may include connections from the first protection device and the secondary protection devices to a centralized computing resource.

Each of the secondary protection devices may provide overcurrent protection to its respective secondary feeder based on its respective secondary current signal. A first one of the secondary protection devices may be associated with a first one of the secondary feeders and be connected to a second one of the secondary Rogowski coils that is associated with a second one of the secondary feeders to thereby provide back-up protection to the second one of the secondary feeders.

A second Rogowski coil may be associated with the primary feeder and operable to sense a second primary current in the primary feeder, and a second protection device may be operable to receive a second current signal from the second Rogowski coil, wherein the first protection device may determine an existence of a fault associated with the primary feeder based on the first current signal and the second current signal.

By using the communications link, a first one of the first protection device and the secondary protection devices may act as a backup to a second one of the first protection device and the secondary protection devices, upon determining that the second one of the first protection device and the secondary protection devices is inoperable. A first analog-to-digital converter may be connected to the first Rogowski coil and operable to output the first current signal as a first digital output, and secondary analog-to-digital converters, connected to respective ones of the secondary Rogowski coils, may be operable to output the secondary current signals as secondary digital outputs. In this case, the communications link may include a centralized computer resource operable to input the first digital output and the secondary digital outputs, and the first protection device and the secondary protection devices may receive the first digital output and the secondary digital outputs from the centralized computer resource.

In a further, a primary current in a primary feeder of an electrical system is measured using a first Rogowski coil, a first current signal generated by the first Rogowski coil is received at a first protection device, secondary currents in secondary feeders using corresponding secondary Rogowski coils are measured, secondary current signals that are generated by the secondary Rogowski coils are received at corresponding secondary protection devices, and the first current signal and the secondary current signals are transmitted between the first protection device and the secondary protection devices using a communications link.

Implementations may include one or more of the following features. For example, the first protection device and the secondary protection devices may include differential relays. It may be determined at the first protection device that a fault associated with the electrical system exists, based on the first current signal and the secondary current signals.

It also may be determined at the first protection device that a fault associated with a connection bus exists, based on the first current signal and the secondary current signals, wherein the connection bus connects the primary feeder to each of the secondary feeders. In transmitting the first current signal and the secondary current signals, peer-to-peer connections between the first protection device and the secondary protection devices may be used, or a centralized computing resource may be used.

Each of the secondary protection devices may provide overcurrent protection to its respective secondary feeder based on its respective secondary current signal. In this case, associating a first one of the secondary protection devices may be associated with a first one of the secondary feeders, and the first one of the secondary protection devices may be connected to a second one of the secondary Rogowski coils that is associated with a second one of the secondary feeders to thereby provide back-up protection to the second one of the secondary feeders.

A second primary current in the primary feeder may be measured using a second Rogowski coil, a second current signal generated by the second Rogowski coil may be input into a second protection device, and, using the first protection device, a fault associated with the primary feeder maybe determined to exist based on the first current signal and the second current signal.

The first current signal maybe output as a first digital output from a first analog-to-digital converter connected to the first Rogowski coil, and the secondary current signals may be output as secondary digital outputs from secondary analog-to-digital converters connected to respective ones of the secondary Rogowski coils. In this case, the first digital output and the secondary digital outputs may be input at a centralized computer resource associated with the communications links, wherein the first protection device and the secondary protection device may input the first digital output and the secondary digital outputs through the centralized computer resource.

In a yet furher example, an electrical protection system includes a first Rogowski coil positioned along a first conductor and operable to measure a first current in the first conductor and output a first signal, where the first conductor is part of an electric arc furnace (EAF) system, and a protection device operable to use the first signal in determining that a fault exists in the EAF system.

Implementations may include one or more of the following features. For example, the first conductor may be associated with a primary winding of a transformer of the EAF system. In this case, the first Rogowski coil is located outside of a vault housing the transformer.

The first conductor may be associated with a secondary winding of a transformer of the EAF system. In this case, the first current is output from the secondary winding, and the first Rogowski coil may be located within a vault housing the transformer. Also, the first conductor may include a conducting arm attached to an electrode of the EAF system.

A second Rogowski coil may be positioned along a second conductor of the EAF system and may be operable to measure a second current in the second conductor and output a second signal. In this case, the first conductor may be associated with a primary winding of a transformer of the EAF system and the second conductor may be associated with a secondary winding of the transformer. Also, the protection device may include a differential relay.

The differential relay may determine that the fault exists based on the first signal and the second signal, and the differential relay may determine that the fault exists between the first Rogowski coil and the second coil. A third Rogowski coil may be positioned along a third conductor of the EAF system and may be operable to measure a third current in the third conductor and output a third signal.

In this case, the differential relay may determine that the fault exists between the second Rogowski coil and the third Rogowski coil, or may determine that the fault exists between the first Rogowski coil and the third Rogowski coil.

A table containing a first winding ratio of a transformer of the EAF system at a first position of an operating tap of the transformer and a second winding ratio of the transformer at a second position of the operating tap also may be included. In this case, the protection device may be operable to determine whether the first winding ratio or the second winding ratio is associated with a present position of the operating tap, and may be further operable to scale a magnitude of the first signal based on the present position.

In a further example, a first current is measured in a first conductor using a first Rogowski coil, where the first conductor is part of an electric arc furnace (EAF) system, a first signal is output from the first Rogowski coil, the first signal is input at a protection device, and the fault is determined to exist in the EAF system, based on the first signal.

Implementations may include one or more of the following features. For example, a second current in a second conductor of the EAF system may be measured using a second Rogowski coil, a second signal may be output from the second Rogowski coil, and the second signal may be input at the protection device, which may include a differential relay.

In this case, the fault may be determined to exist in the EAF system between the first Rogowski coil and the second Rogowski coil, based on the first signal and the second signal. Also, a third current may be measured in a third conductor of the EAF system using a third Rogowski coil, a third signal may be output from the third Rogowski coil, and the third signal may be input at the protection device.

In the latter case, the fault may be determined to exist in the EAF system between the second Rogowski coil and the third Rogowski coil, based on the second signal and the third signal. Also, the fault may be determined to exist in the EAF system between the first Rogowski coil and the third Rogowski coil, based on the first signal and the third signal.

In the latter case, the first conductor may be associated with a primary winding of a transformer of the EAF system, and the second conductor and the third conductor may be associated with a secondary winding of the transformer.

In a still further example, an electrical protection system includes a first Rogowski coil positioned to measure a first current at a first location of an electrical arc furnace (EAF) system and output a first signal, a second Rogowski coil positioned to measure a second current at a second location of the EAF system and output a second signal, and a protection device operable to input the first signal and the second signal and determine that a fault exists within the EAF system based on the first signal and the second signal.

Implementations may include one or more of the following features. For example, the protection device may be include a differential relay. Also, the protection device may be further operable to open a circuit breaker associated with the EAF system upon determination of the fault.

The details of one or more implementations are set forth in the accompanying drawings and the description below. Other features will be apparent from the description and drawings, and from the claims.

### DESCRIPTION OF DRAWINGS

FIG. 1 is a circuit diagram of an electrical protection system.
FIG. 2 is a first illustration of Rogowski coils that may be used in the electrical protection system of FIG. 1.
FIG. 3 is a second illustration of Rogowski coils that may be used in the electrical protection system of FIG. 1.
FIGS. 4-7 are circuit diagrams of spot network protection systems.
FIGS. 8-12 are circuit diagrams of substation protection systems.
FIG. 13 is a circuit diagram of a first electric arc furnace (EAF) protection system.
FIG. 14 is a diagram of an implementation of the EAF protection system of FIG. 13.
FIG. 15 is a first illustration of Rogowski coils that may be used in the EAF protection system of FIG. 13.
FIG. 16 is a second illustration of Rogowski coils that may be used in the EAF protection system of FIG. 13.
FIG. 17 is a circuit diagram of a second EAF protection system.
FIG. 18 is a circuit diagram of a first test circuit for testing an electrical protection system,
FIG. 19 is a graph of test results of the test circuit of FIG. 18.
FIG. 20 is a first graph of a comparison of waveforms illustrated in FIG. 19.
FIG. 21 is a second graph of a comparison of waveforms illustrated in FIG. 19.
FIG. 22 is a circuit diagram of a second test circuit for testing an electrical protection system.
FIG. 23 is a graph demonstrating a result of a simulation of the test circuit of FIG. 22.

### DETAILED DESCRIPTION

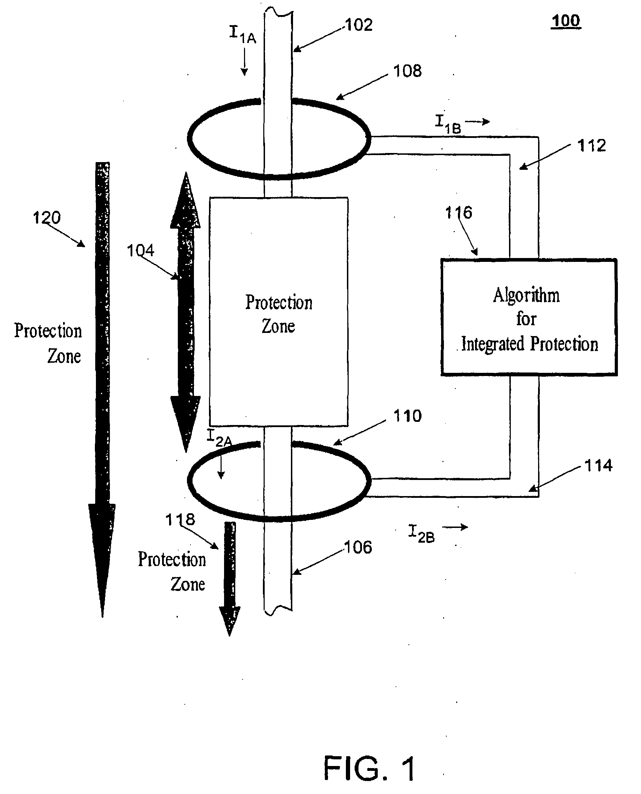

FIG. 1 is a circuit diagram of an electrical protection system 100 in which a first conductor 102 carries a current I_{1A} to a circuit element within a first protection zone 104. The first protection zone 104 may include one or more circuit elements (not shown), such as, for example, a transformer. Such a transformer might be responsible for converting a first voltage associated with the first conductor 102 into a second voltage that the transformer provides to a second conductor 106 so that a current I_{2A} is output through the second conductor 106. However, any number of circuit elements also could be included within the first protection zone 104.

A first coil 108 encircles the first conductor 102 and outputs a current I_{1B}. The first coil 108 is a Rogowski coil. Generally speaking, a Rogowski coil includes a conductive element that is wound around a non-magnetic core. The conductive element may be, for example, a metal wire or a metal deposit. The non-magnetic core may be made of any material that has a magnetic permeability that is substantially equal to the permeability of free space, such as, for example, an air core or a printed circuit board (PCB) on which the conductive element is traced.

The coil 108 typically measures a voltage induced in the coil when the conductor 102 is placed within the coil 108, and the current I_{1B} is then calculated based on the measured voltage. Thus, various measuring and/or calculation devices (not shown) may be associated with the coil 108, such as a voltage-measuring device or a current-calculating device. Such devices may include, or be associated with, computer hardware or software for performing their respective functions.

The coil 108 may be constructed according to various techniques. Examples of such techniques are discussed in, for example, U.S. Patent 6,313,623 and U.S. Application No. 10/083,646 (US Patent No. 6,680,608). For example, the coil 108 may include two or more arms that form a main loop (or loops) of the coil 108 when coupled together. Various winding techniques for winding the conductive element may be used in constructing the coil 108, and the coil 108 may include multiple coils that are associated with one another in various ways. These and other construction details related to the coil 108 may be selected so as to ensure high levels of sensitivity and accuracy in determining the current I_{1B}.

A second coil 110 encircles the second conductor 106, and outputs a current I_{2B}. The current I_{1B} and the current I_{2B} are output along a first pair of wires 112 and a second pair of wires 114, respectively, to a relay 116. The relay 116, generally speaking, serves to provide integrated protection against short circuits and other system malfunctions and/or failures, as described in more detail below. As such, the relay 116 may be programmed or otherwise associated with a pre-determined algorithm for automatically implementing the integrated protection scheme(s).

With regard to the protection system 100, the relay 116 is capable of providing multiple types of protection against electrical or mechanical malfunctions and failures, and of integrating these types of protection into a cohesive protection scheme. Moreover, the relay 116 is capable of interacting with other relays and/or other coils, in order to provide further options for constructing an integrated electrical protection system.

One type of protection afforded by the relay 116 is differential protection. In a differential protection scheme, the relay 116 operates to compare the currents I_{1B} and I_{2B}, in order to ensure that the two currents have some pre-determined relationship to one another. As one example, the relay 116 may determine that an output current, I₀, exceeds a difference of the currents I_{1B} and I_{2B}, where a factor may be included to account for acceptable levels of measurement errors. In this way, the relay 116 may protect circuit elements within the first protection zone 104 by, for example, tripping a circuit breaker or other circuit protection element (not shown).

A second type of protection enabled by the relay 116 is overcurrent sensing, in which the relay 116 is pre-programmed with a maximum acceptable current level for a particular portion or element of a circuit. The relay 116 compares an actual current within a overcurrent protection zone, such as the current I_{2A} within a second protection zone 118 (as represented by the current I_{2B}), to the maximum current level. When the maximum current level is exceeded, the relay 116 may then protect elements within the second protection zone 118 by tripping an appropriate circuit breaker.

In another aspect of the protection system 100, a third protection zone 120 may be defined as a back-up protection zone to, for example, one or both of the first protection zone 104 and the second protection zone 118. For example, if the coil 110 were to malfunction.and become unavailable, then both the differential protection of the first protection zone 104 and the overcurrent protection of the second protection zone 118 could become unavailable. In this case, the relay 116 may be able to provide, for example, back-up overcurrent protection to all circuit elements within the first and second protection zone 104 and 118, respectively (i.e., to all circuit elements within the third protection zone 120).

The relay 116 may measure the relevant current(s) in a number of ways. For example, the relay may take samples of one or more full cycles of each current, and may use those samples to determine the frequency, amplitude, and/or phase of the current. As another example, the relay 116 may calculate a differential of the current with respect to time. When using the latter methodology, it may not be necessary to obtain a full cycle of the relevant current(s).

The relay 116 may be, for example, a microprocessor-controlled, multi-function relay, such as a three-phase relay having multiple voltage and/or current inputs. As discussed, in more detail below, the relay 116 may be in communication with circuit breakers, companion relays, control equipment, and other circuit elements. For example, the relay 116 may be connected to an "upstream" circuit breaker that is located before the coil 108 with respect to the current I_{1A} so that the relay 116 may trip the circuit breaker upon detection of a fault. As another example, the relay 116 may be connected to a network switch/hub that supports having the relay 116 communicate with other relays in implementing an electrical protection system.

In addition, coils 108 and 110 may be connected to a secondary relay (not shown in FIG. 1), either directly through one or more other pairs of wires similar to wires 112 and 114, or indirectly through, for example, a network switch/hub. In this case, the secondary relay may provide fast back-up protection for the relay 116 (thereby protecting the transformer and/or the conductor 102) by receiving current measurements from the coils 108 and 110.

Although a transformer is mentioned above as a circuit element that might be protected by the electrical protection system 100, many other circuit elements may be used. For example, a network bus that distributes power to one or more feeder lines may be protected by such a system. In this case, a different coil (current sensor) may be associated with each of the feeder lines, and the relay 116 may ensure that a current entering the bus is equal to a total current exiting the feeder lines.

Using these and related techniques, sensitive and/or expensive electrical equipment may be protected from damage due to fault currents. Moreover, by placing the coils 108 and 110 around selected pieces of circuitry/equipment, and thereby establishing the protection zones 104, 118, and 120 of FIG. 1, a location as well as an existence of a fault current may be accurately detected. Additionally, a number of current sensors (coils) and relays may be minimized (relative to other electrical protection systems) so as to increase an ease of installation. These and other uses of the system 100 and related systems are discussed in more detail below.

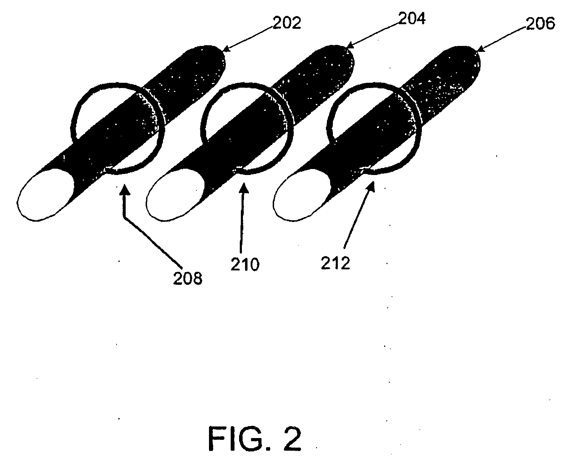

FIG. 2 illustrates Rogowski coils that may be used in the electrical protection system 100 of FIG. 1. As shown, conductors 202, 204, and 206 are encircled by Rogowski coils 208, 210, and 212, respectively. It should be understood that the Rogowski coils are discrete elements that can be separately placed around the conductors 202, 204, and 206.

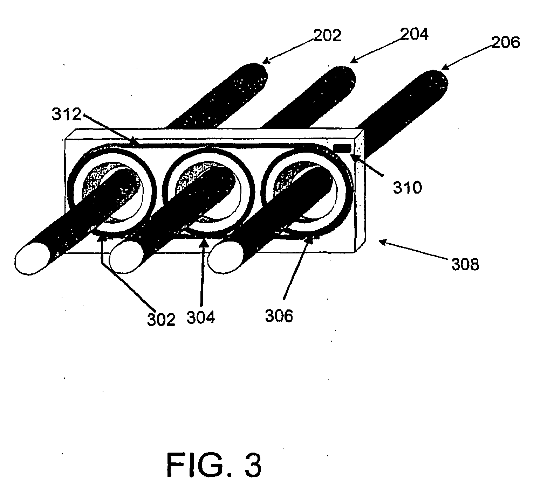

FIG. 3 also illustrates Rogowski coils that may be used in the electrical protection system 100 of FIG. 1. In contrast to FIG. 2, FIG. 3 illustrates Rogowski coils 302, 304, and 306 that are integrally formed within a body 308. A single output connector 310 may be used to obtain outputs of all three of the Rogowski coils 302, 304, and 306. The coils 302, 304, and 306 may be used to measure phase currents in a three-phase system. An additional neutral Rogowski coil 312 may be used for detecting a sum of the currents through the conductors 202, 204, and 206 for the purpose of producing a residual current measurement.

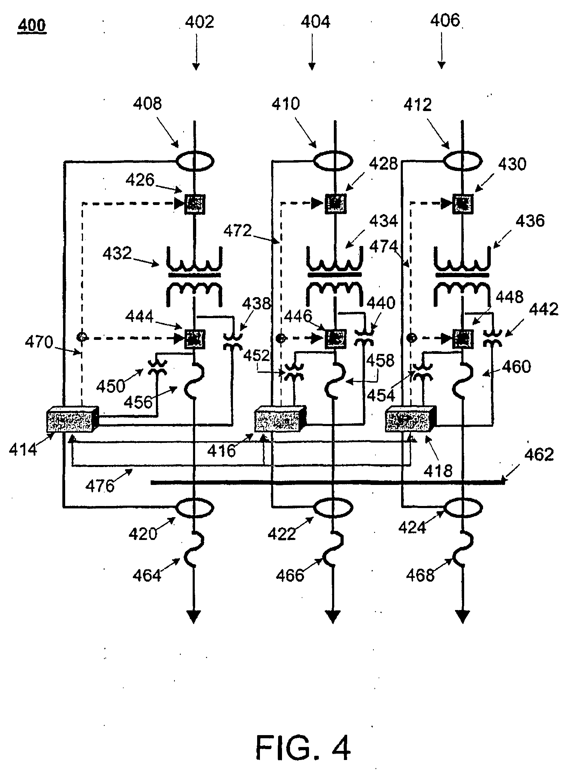

FIG. 4 is a circuit diagram of a first spot network protection system 400. For the sake of simplicity and clarity, FIG. 4 is illustrated as a single-line diagram. However, it should be understood with respect to FIG. 4 (as well as with respect to following figures), that a given single line may represent two or more similar or identical lines that may exist in a physical implementation. For example, a single-line conductor in FIG 4 may represent a set of three conductors, such as are illustrated above in FIGS. 2 and 3.

A spot network system, generally speaking, is a network system that is implemented for a single customer load, such as a single commercial building. A spot network may be thought of as a grid network system applied on a smaller scale, where a grid network system is a type of network developed to supply power to densely loaded urban areas in an extremely flexible and reliable manner.

Such spot and grid network systems include multiple network units for transforming power from a primary supplier to a secondary load. Thus, a network unit is typically connected on an input side to a primary cable (e.g., a cable from a power supply company), and on an output side to a secondary cable (e.g., a cable providing service to a customer). Internally, the network unit may contain a primary switching device (for determining whether power is transmitted from the primary cable), a network transformer, and various electrical protection elements, such as circuit breakers and fuses. A more detailed discussion is provided below with respect to spot network system network units. However, similar explanations also may be applied to grid network system network units.

In FIG. 4, the spot network system includes spot network units (SNU) 402, 404, and 406. In the SNUs 402, 404, and 406, respectively, coils 408, 410, and 412 are associated with a primary or input side of each SNU. The coils 408, 410, and 412 are connected to relays 414, 416, and 418. The relays 414, 416, and 418 are further connected to coils 420, 422, and 424, which are associated with a secondary or output side of each SNU.

Thus, as described above with respect to the electrical protection system 100 of FIG. 1, each grouping of two or more coils and a relay serve to provide maintenance and/or protection information. Taking SNU 402 as an example, coils 408 and 420 act as current sensors that provide current measurements to the relay 414, which may be a multi-function, differential relay having multiple current and voltage inputs. The relay 414 compares current measurements from each of the coils 408 and 420 to determine whether, for example, a fault current exists somewhere along the current path between the coil 408 and the coil 420. Such a fault current may be associated with any electrical component associated with the SNU 402 and located between the coils 408 and 420, and any electrical components located between the coilsl 408 and 420 may be said to be within a "zone of protection" of the coils 408 and 420 and the relay 414. In accordance with the claimed invention, the coils 408 and 420 are Rogowski coils.

The SNUs 402, 404, and 406 each contain, respectively, primary circuit breakers 426, 428, and 430 that are capable of interrupting power to network transformers 432, 434, and 436 of the SNU. The network transformers 432, 434, and 436 of SNUs 402, 404, and 406 serve to "step-down" a primary voltage at a primary or input side of each transformer 432, 434, and 436 to a lower, secondary voltage at a secondary or output side, and simultaneously serve to "step-up" a primary current to a higher secondary current.

A first set of voltage transformers 438, 440, and 442 detect a voltage at the secondary side of the transformers 432, 434, and 436 at an input of secondary circuit breakers 444, 446, and 448. A second set of voltage transformers 450, 452, and 454 similarly detect a voltage at an output of the secondary circuit breakers 444, 446, and 448. The two sets of voltage transformers are connected to the relays 414, 416, and 418, and serve to, for example, step-down the primary/secondary voltages to levels that are acceptable to the relays 414, 416, and 418. Each of these transformers serves to supply a voltage associated with a measured current to the transformer's respective relays, where such a voltage may be needed to, for example, calculate the magnitude and/or direction of a desired power signal. Moreover, the measured voltages may be used to supply a timing signal to one or more relays for coordinating current measurements, as discussed in more detail below.

For example, secondary circuit breakers 444, 446, and 448 may be low-voltage air circuit breakers, and the relays 414, 416, and 418 may act as reverse power relays (which detect reverse current flow in the SNUs) and/or as phasing relays (which supervise closing of the secondary circuit breakers 444, 446, and 448 by comparing phase angles between a pre-determined pair of voltages).

Fuses 456, 458, and 460 serve as yet further contingent protection for the SNUs 402, 404, and 406.

In addition, all of the SNUs 402, 404, and 406 are connected together by a collector bus 462. The bus 462, among other functions, provides redundancy in the spot network system 400 by allowing power from a working SNU to be transferred to an output of a non-working SNU.

Fuses 464, 466, and 468 provide a final level of protection at an output of the SNUs 402,404, and 406. The fuses 464, 466, and 468 may be used, for example, to clear sustained high-current faults in the (low-voltage) bus 462, within customer switchgear (not shown), or in an interconnection of the bus 462 to the customer switchgear.

In the spot network system 400, fault detection and clearing may be non-selective or selective. That is, the spot network system 400 may respond to detection of a fault anywhere within the system 400 either by shutting down all of the SNUs 402, 404, and 406, or by shutting down only the SNU in which the fault was detected.

As an example of non-selective fault detection and clearing, for a fault in a zone of protection between the three pairs of coils, one of the relays 414, 416, and 418 may detect the faults and trip the corresponding one of the primary circuit breakers 426, 428, and 430 (and/or one of the secondary circuit breakers 444, 446, and 448), using a corresponding connection 470, 472, or 474 to the circuit breaker. The relays 414, 416, and 418 may communicate with one another to implement the non-selective fault clearing through a communications link such as a network 476.

Such non-selective fault clearing is secure, easy to implement, and cost-effective. However, this implementation also may cause more service interruptions than are necessary.

As an example of selective fault detection and clearing, the relay 414 may detect a fault within the SNU 402, and may respond by tripping the primary circuit breaker 426 and/or the secondary circuit breaker 444. In this example, the relay 414 immediately notifies SNUs 404 and 406, through the network 476, that the relay 414 has detected a fault. The SNUs 404 and 406 continue normal operation for some pre-determined period of time, during which they wait for confirmation that the primary circuit breaker 426 and/or the secondary circuit breaker 444 have in fact been tripped. If such confirmation is received, then the SNUs 404 and 406 continue normal operation, and the bus 462 may be used to route power from one or more of the working SNUs 404 and 406 to an output of the non-working SNU 402. If the confirmation is not received, the relays 416 and 418 trip their respective circuit breakers 428 and 446 and/or 430 and 448.

Such a selective fault clearing implementation may require, for example, further efforts in connecting and programming the relays 414, 416, and 418, when compared to the non-selective implementation described above. However, the selective fault clearing implementation helps minimize the number of outages experienced by a user of the spot network system 400.

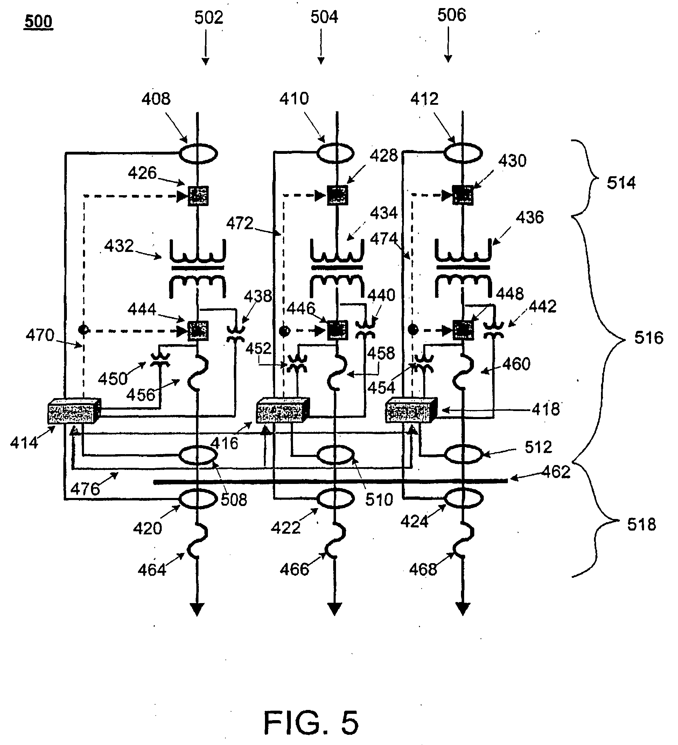

FIG. 5 is a circuit diagram of a second spot network protection system 500. The spot network system 500 includes SNUs 502, 504, and 506, which are similar to the SNUs 402, 404, and 406 of FIG. 4. SNUs 502-506 differ from SNU's 402-406 in that SNUs 502-506 contain additional coils 508, 510, and 512, respectively.

Referring to the SNU 502, the coil 508 is placed with the secondary circuit breaker 444 and fuse 456 on one side, and the bus 462 on the other side. This configuration allows SNU 502 to provide multiple, independent zones of protection. Specifically, a first protection zone 514 includes any primary conductors located on the primary input side of the primary circuit breaker 426. A second protection zone 516 encloses the network power transformer 432, the secondary circuit breaker 444, and any other conductors leading to the coil 508. Finally, a third protection zone 518 encloses the collector bus 462, along with any other conductors leading to the coil 420. It should be understood that the definitions of the protection zones 514, 516, and 518 also apply to the SNUs 504 and 506.

In the spot network system 500, one of the relays 414, 416, and 418 may thus detect a fault in one of the particular protection zones 514, 516, or 518, thereby allowing further selectivity in detecting and clearing faults. For example, for a fault in the transformer 432, the relay 414 may detect overcurrent based on signals from coils 408 and 508, as well as associated reverse power through the SNU 502 (detected through voltage transformers 438 and 450).

Accordingly, the relay 414 may immediately notify the relays 416 and 418 of the fault detection, whereupon the relays 416 and 418 wait for confirmation of appropriate action by the relay 414. If the relay 414 proceeds to take appropriate action, such as, for example, tripping the primary circuit breaker 426 and/or the secondary circuit breaker 444, then the relays 416 and 418 will be so notified, and the SNUs 504 and 506 will continue normal operation. However, if, after some pre-determined amount of time, the relays 416 and 418 do not receive confirmation that the relay 414 has taken appropriate action, then the relays 416 and 418 may trip their associated primary circuit breakers 428 and 430 and/or secondary circuit breakers 446 and 448. In this way, service outages may be reduced, and back-up protection may be provided.

A second example of selective fault clearing in the spot network system 500 may involve a fault in the third protection zone 518, which includes the bus 462. Generally speaking, a fault associated with the bus 462 may be detected as identical or nearly identical changes in the current at each of the relays 414, 416, and 418, since the bus 462 is associated with all of the SNUs 502, 504, and 506. For example, the relays 414, 416, and 418 may detect a sudden increase in primary currents, based on signals from the coils 408, 410, and 412 and the coils 508, 510, and 512. At the same time, secondary currents, as detected by coils 420, 422, and 424, may not change significantly (depending on the fault resistance). Since the relays 414, 416, and 418 are in communication with one another through the network 476, they are each aware of the above information, and can therefore conclude that the fault is within the third protection zone 518, and, accordingly, trip all of the primary circuit breakers 426, 428, and 430.

A third example of selective fault clearing in the spot network system 500 may include a fault in the first protection zone 514. In this case, faults may be detected as described above with respect to FIG. 4.

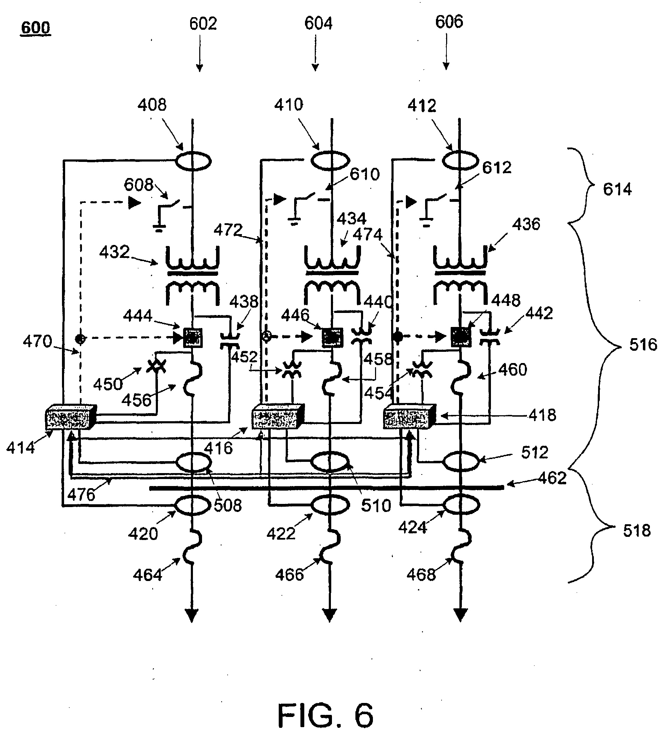

FIG. 6 is a circuit diagram of a third spot network protection system 600. The spot network system 600 includes SNUs 602, 604, and 606, which are similar to the SNUs 402, 404, and 406 of FIG. 4 and the SNUs 502, 504, 506 of FIG. 5. The SNUs 602, 604, and 606 differ from the previously-described SNUs by replacing primary circuit breakers 426, 428, and 430 with fast-grounding switches 606, 608, and 610.

The fast-grounding switches 608, 610, and 612, which are included within a protection zone 614, are designed to close upon occurrence of a low-current fault. In this case, the fault current will increase, thereby forcing a circuit breaker located at an associated power substation (not shown) to interrupt the current. Other techniques exist for tripping such a substation circuit breaker, such as, for example, a direct communication to the substation that the fault has been detected (using, for example, a Wide Area Network (WAN)).

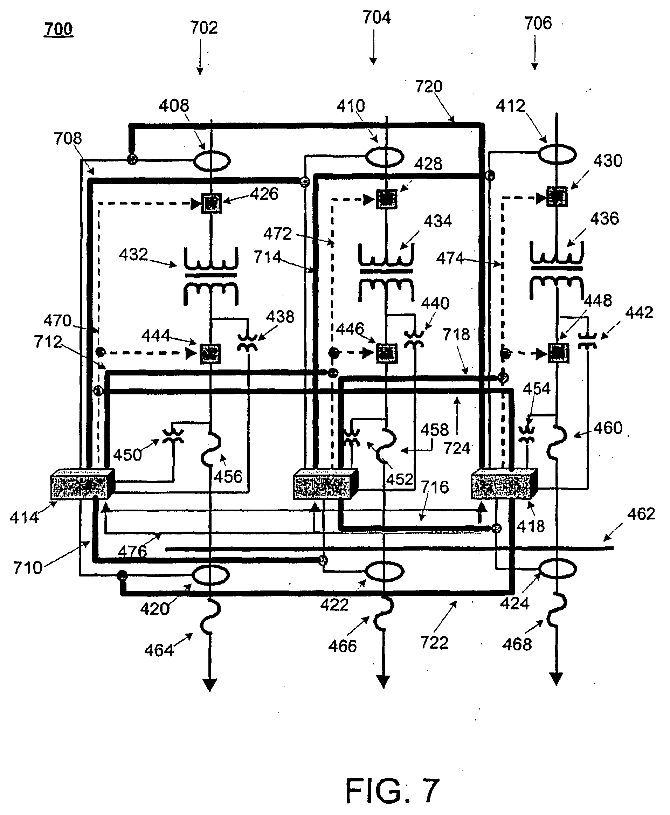

FIG. 7 is a circuit diagram of a fourth spot network protection system 700. The spot network system 700 includes SNUs 702, 704, and 706, which are similar to the SNUs 402, 404, and 406 of FIG. 4. The SNUs 702, 704, and 706 additionally provide main and fast back-up protection, using a number of additional connections (illustrated in bold type in FIG. 7) beyond those illustrated in FIG. 4.

More specifcally, in the spot network system 700, each of the SNUs 702, 704, and 706 has the ability to monitor and affect at least one other SNU within the system 700. Thus, in SNU 702, a connection 708 provides the relay 414 with information about a primary current in the SNU 704 (through the coil 410), while a connection 710 provides the relay 414 with information about a secondary current in the SNU 704 (through the coil 422). A control connection 712 provides the relay 414 with the ability to trip one or both of the circuit breakers 428 and 446 within SNU 704.

Similarly, in SNU 704, a connection 714 provides the relay 416 with information about a primary current in the SNU 706, while a connection 716 provides the relay 416 with information about a secondary current in the SNU 706. A control connection 718 provides the relay 416 with the ability to trip one or both of the circuit breakers 430 and 448 within SNU 706.

Finally, in SNU 706, a connection 720 provides the relay 418 with information about a primary current in the SNU 702, while a connection 722 provides the relay 418 with information about a secondary current in the SNU 702. A control connection 724 provides the relay 418 with the ability to trip one or both of the circuit breakers 426 and 444 within SNU 702.

In the system 700, then, relays 414, 416, and 418 provide "fast" back-up protection by receiving direct signals from two or more of the coils 408, 410, 412, 420, 422, and 424. For example, the relay 414 may determine, through the connections 708 and 710, that there is a fault current within the SNU 704. The relay 414 may then wait some predetermined amount of time in order to allow the relay 416 to clear the fault. If the relay 416 does not detect and/or clear the fault within the predetermined amount of time, the relay 414 may directly trip the circuit breakers 428 and/or 446 of SNU 704 using the control connection 712.

Moreover, even when a fault does not currently exist, a relay that becomes inoperable will be detected by (or will notify) the remaining relays. For example, the relay 418 may become inoperable or removed for maintenance, whereupon the relay 416 may be notified (or otherwise become aware) that it should assume responsibility for measuring currents through the SNU 706, through the connections 714 and 716. If necessary, the relay 416 can, upon detection of a fault, trip the circuit breakers 430 and 448 of SNU 706 using the control connection 718.

In the implementation of FIG. 7 and related implementations, the fast back-up protection can be provided very quickly, without impacting an overall speed of fault clearance or an area of a given protection zone.

Although specific implementations have been discussed above with respect to FIGS. 1-7, variations on, or combinations of, these implementations also may be implemented. For example, in the implementation of the spot network system 700 of FIG. 7, nine coils may be used to provide a greater number of protection zones (similarly to the implementation of the spot network system 500 of FIG. 5), rather than the six coils illustrated in FIG. 7. As another example, a "hot line tag" on an overhead power supply line may be incorporated to instantaneously activate the relays 414, 416, and 418 when line crews begin work on a piece of network equipment.

Various other elements may be used in conjunction with the described implementations. For example, a heat sensor, an ultraviolet light sensor, a smoke detector, or a sudden pressure relay (SPR) in a transformer may be used to provide additional, or (in some cases) alternative protection to various circuit elements within the spot network systems.

Although implementations discussed above primarily relate to spot network systems, similar techniques can be used in grid network systems, as well as in many other types of systems. For example, in grid network systems, a number of coils at a corresponding number of grid outputs may all be wired to a single relay that compares the total of the various output currents to an input current of the grid network.

Additionally, although the implementations of FIGS. 4-7 focus on systems having three network units, other implementations may have less or more network units, with corresponding numbers of coils and/or relays.

As discussed above, Rogowski coils are used as the current sensing coils of FIGS. 4-7. Rogowski coils are very sensitive to even low-level current changes, and are thus capable of, for example, detecting and clearing sustained arcing fault currents. Such fault currents generally are at a small fraction of the maximum available fault current, and not much higher than the load currents themselves.

The ability to detect small current changes means that fault detection levels may be set relatively, low, thereby reducing stress on (or damage to) equipment and speeding fault response times, without sacrificing reliability, Moreover, a risk of fire propagation is reduced, and faster response times (including a faster restoration of service) may be provided.

Rogowski coils may be designed not to saturate, and therefore may be capable of handling large currents, and avoiding false tripping of circuit breakers that may be caused by faults outside the network unit (e.g., faults within customer equipment). Additionally, Rogowski coils are generally immune to external magnetic fields, and therefore avoid any effects of such fields on current measurements. Moreover, Rogowski coils are relatively inexpensive, and may not require substantial space or wiring. Finally, Rogowski coils are easily installed by, for example, simply placing the relevant conductor through the coils (or by placing the coils around the conductor).

In both spot network systems and grid network systems, reliability of service is a primary design goal. As a result, maintenance of such systems may be difficult, since failed components may go unnoticed until one or more of their back-up components also fail. In the described implementations, however, information about both a magnitude and location of a fault may be provided, using pre-defined protection zones. Thus, faults may be pinpointed and corrected before a redundancy of the relevant system is exhausted.

As shown above, the fault detection techniques of the various implementations may be applied at a primary side and/or a secondary side of a network unit, to provide main and back-up protection both locally and over a communication system. The protection may be selective or non-selective to varying degrees, depending upon the needs of a particular user.

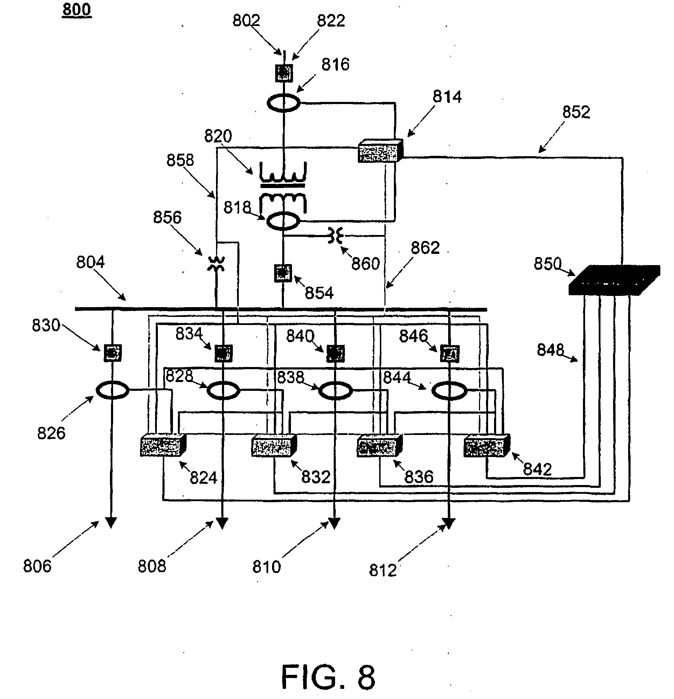

FIG. 8 is a circuit diagram of a substation protection system 800. In FIG. 8, a primary or input feeder 802 provides power over a bus 804 to secondary or output feeders 806, 808, 810, and 812. A primary relay 814 receives current information about currents on the input feeder 802 through a coil 816 and a coil 818. Using the current information from coils 816 and 818, the primary relay 814 provides main protection for a power transformer 820.

Specifically, as described above, the primary relay 814 may be a multi-function differential relay having multiple current and voltage inputs, and may compare the current information from coils 816 and 818 to discern an unacceptable differential therebetween. Upon detecting such a differential, the primary relay 814 trips a circuit breaker 822 to interrupt incoming current on the input feeder 802. While the primary relay 814 is connected to the circuit breaker 822 (as shown above in FIGS. 4-7), this connection is not shown in FIG. 8 for the sake of clarity.

A first feeder relay 824 is directly connected to a coil 826 associated with the first feeder 806, and to another coil 828 that is associated with the second feeder 808. From the coil 826, the first feeder relay 824 obtains information regarding a current on the first feeder 806. By comparing the current to a predetermined maximum allowable current, the first feeder relay 824 provides main protection for the first feeder 806 in the form of overcurrent sensing. When the first feeder relay 824 determines that a fault exists, the relay 824 trips a circuit breaker 830 to interrupt power to the first feeder 806.

Similarly, a second feeder relay 832 provides main protection for the second feeder 808. That is, the second feeder relay 832 senses any overcurrent on the second feeder 808 by way of the coil 828, and clears the fault by tripping a circuit breaker 834. Moreover, using the direct connection to the coil 828, the first feeder relay 824 provides overcurrent sensing back-up protection for the second feeder 808. Specifically, the first feeder relay 824 monitors information from the coil 828, and, upon determining that the second feeder relay 832 is inoperative, trips the circuit breaker 824 when detecting a fault on the second feeder 808.

The first feeder relay 824 may determine that the second feeder relay 832 is inoperative by, for example, detecting that a fault on the second feeder 808 has not been cleared after some predetermined amount of time. Alternatively, the second feeder relay 832 may send out a signal upon detection of its own malfunction, or a third party (e.g., a repair person) may notify the first feeder relay 824 of the malfunction at the second feeder relay 832. As a final example, the first feeder relay 824 may periodically transmit status requests to the second feeder relay 832, and may assume malfunction when a reply is not received. Techniques for allowing these and other communications between the relays 824 and 832 (and other relays within the system 800) are discussed in more detail below.

Analogously, a third feeder relay 836 provides primary overcurrent protection to the third feeder 810 using a connection to a coil 838 to determine whether to trip a circuit breaker 840. The second feeder relay 832 is directly connected to the coil 838 and the circuit breaker 840, and thus provides fast back-up protection for the third feeder relay 836.

A fourth feeder relay 842 provides primary protection to the fourth feeder 812 using a connection to a coil 844 to determine whether to trip a circuit breaker 846. The third feeder relay 836 is directly connected to the coil 844 and the circuit breaker 846, and thus provides fast back-up protection for the fourth feeder relay 842. Also, the fourth feeder relay 842 is directly connected to the coil 826 and the circuit breaker 830, and thus provides fast back-up protection for the first feeder relay 824.

In summary, the first feeder relay 824 provides main protection for the first feeder 806 and back-up protection for the second feeder 808. The second feeder relay 832 provides main protection for the second feeder 808 and back-up protection for the third feeder 810. The third feeder relay 836 provides main protection for the third feeder 810 and back-up protection for the fourth feeder 812. Finally, the fourth feeder relay 842 provides main protection for the fourth feeder 812 and back-up protection for the first feeder 806.

Thus, the relays 824, 832, 836, and 842, acting in their capacities as fast backups, reduce a time during which fault current flows on a malfunctioning feeder, and thereby reduce stress on system components (relative to conventional systems).

In addition to the main and fast back-up protections just described, the feeders 806, 808, 810, and 812 are connected by connections 848 to a communications switch or hub 850, which, in turn, is connected by a connection 852 to the primary relay 814. Using information exchanged through the communications hub 850, the primary relay 814 provides main differential protection for the bus 804, as well as fast back-up overcurrent protection for all of the feeders 824, 832, 836, and 842.

In providing main differential protection for the bus 804, the primary relay 814 receives information about a current flowing in the first feeder 806, based on measurements taken by the coil 826 and transmitted through the first feeder relay 824, the connections 848, the communications hub 850, and the connection 852. The primary relay 814 similarly receives information about the currents flowing in each of the remaining feeders 832, 836, and 842.

Then, acting in a differential mode of operation, the primary relay 814 compares, for example, a sum of the currents in the four feeders 806, 808, 810, and 812 to a current flowing into the bus 804 (as detected by the coil 818, which is directly connected to the primary relay 814). Based on this comparison, the primary relay 814 determines whether a fault exists that is associated with the bus 804. For example, the primary relay 814 may determine that a simultaneous current decrease has occurred in each of the four feeders 806, 808, 810, and 812, and as a result, may determine that a fault exists in the bus 804. In such cases, the relay 814 may trip a circuit breaker 854, to interrupt power to the bus 804.

Although the communications hub 850 may communicate information between the various relays very quickly, there may nonetheless be some amount of delay in transmitting the various signals. When comparing current signals from each of the four feeders 806, 808, 810, and 812 to a current signal from the primary feeder 802, the primary relay 814 may thus require relative timing information for the current signals in order to account for this delay (as well as other delays that may occur) and make a meaningful comparison of the current signals.

Such timing information can be obtained from various sources. For example, an external synchronizing network may be set up to provide timing information. As another example, the relays 824, 832, 836, and S42 may time-stamp their respective current measurements before transmission of the measurements. Timing information (for example, for the time-stamps) may be used relative to a voltage signal obtained from a voltage transformer 856, and shared between the various relays using a connection 858. Similarly, a voltage transformer 860 may be used as an alternative or back-up source of timing information using a connection 862. Of course, the voltage transformers 856 and 860 may be used for various other purposes, such as detecting a magnitude and/or direction of a particular power signal, as described above with respect to FIG. 4.

In providing fast back-up overcurrent protection for each of the feeders 806, 808, 810, and 812, the primary relay 814 determines that one or more of the relays 824, 832, 836, or 842 has become inoperative to some degree. The primary relay 814 then assumes responsibility for the overcurrent-sensing duties of the inoperative relay, using measurements taken by the relevant coil and transmitted to the primary relay 814 through, for example, the inoperative relay (or the inoperative relay's back-up relay) and the communications hub 850.

Summarizing many of the above-described operations of the electric protection system 800 of FIG. 8, the primary relay 814 provides main differential protection for the power transformer 820 (using coils 816 and 818), main differential protection for the bus 804 (using coil 818 and feeder coils 826, 828, 838, and 844), and secondary back-up protection for each of the feeders 806, 808, 810, and 812 (using direct connections between each feeder relay and at least one other feeder coil).

In the various communications used in these protection techniques, the communications hub 850 (and associated connections 848 and 852) may be used to allow, for example, centralized digital communications. Additionally, or alternatively, the various relays may communicate with one another (and other circuit elements) using, for example, digital or analog peer-to-peer communications over connections 858 and/or 862. Moreover, the various connections, including the connections 848, 852, 856, and 862, may be used as back-up connections for one another.

In FIG. 8, and as referred to above, it should be understood that the various protection schemes may require all of the various relays to be connected to one or more of the various circuit breakers in a manner similar to that illustrated in FIGS. 4-7. However, for the sake of clarity, these connection are not illustrated in FIG. 8.

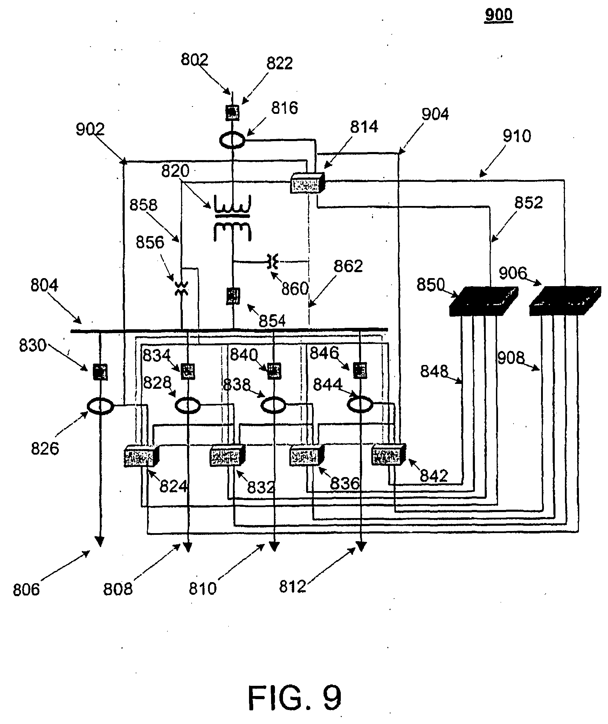

As described herein, Rogowski coils are used as any of the various coils discussed with respect to FIG. 8, and the use of such Rogowski coils may impart various advantages. For example, although multiple Rogowski coils may be used in the place of any particular one of the coils shown in FIG. 8, as needed, the ability of a particular Rogowski coil to avoid saturation may allow a single Rogowski coil to provide current measurements at virtually all required current levels. Moreover, a Rogowski coil may supply sufficient power to its associated relay(s) to reduce or eliminate the need for separate relay power sources. These and various other advantages of using Rogowski coils in the protection techniques described herein, such as those discussed above with respect to FIGS. 4-7, apply to the above discussion of FIG. 8, as well as the following discussion of FIGS. 9-25.

In FIG. 8, the primary relay 814 provides main protection of the transformer 820 and main protection of the bus 804. In FIG. 8, these protections are independent of one another. For example, if the coil 816 were to fail (thereby eliminating the protection of the transformer 820), the primary relay 814 is still able to provide primary protection for the bus 804 (using the coil 818, as described above).

FIG. 9 is a circuit diagram of a substation protection system 900. In FIG. 9, the coil 818 is not used. As a result, although the primary relay 814 provides primary protection for the transformer 820 and the bus 804, these protections are no longer independent of one another. That is, the relay 814 relies on the coil 816 to provide all information about current that is "upstream" of the bus 804. Should the relay 816 become inoperable, then protection for both the transformer 820 and the bus 804 would be affected. Although this implementation results in a loss of redundancy in protecting the bus 804, it also requires one less coil; and therefore may be less expensive and easier to install and configure than the protection system 800 of FIG. 8.

The protection system 900 of FIG. 9 further includes other variations from the protection system 800 of FIG. 8. For example, in the protection system 900, the primary relay 814 provides fast back-up protection for the first feeder 806. This functionality is accomplished by way of a connection 902 between the coil 826 and the primary relay 814, and relieves the fourth feeder relay 842 from serving as the fast back-up to the first feeder 806 (as illustrated in FIG. 8).

Additionally, a connection 904 included in the protection system 900 connects the fourth feeder relay 842 to the coil 816 and the primary relay 814. This connection may be used, for example, to allow the fourth feeder relay 842 to act as a fast back-up to the primary relay 814, thereby helping to make up for the loss of redundancy caused by the removal of the coil 818.

Finally, a secondary communications hub 906 is connected to the feeder relays through a connection 908, and is connected to the primary relay 814 through a connection 910. The secondary communications hub 906 may serve as a back-up to the communications hub 850.

In the protection system 900, then, main differential protection of both the power transformer 820 and the bus 804 is accomplished by the primary relay 814 (using the coil 816 and the feeder coils 826, 828, 838, 844). Fast backup protection for the feeders 808, 810, and 812 is accomplished as described above with respect to FIG. 8, and fast backup protection of the feeder 806 is accomplished by the primary relay 814 (using the connections 902 to the coil 826). The primary relay 814 further provides back-up protection for all four of the feeders 806, 808, 810, and 812, based on signals transmitted by the communications hubs 850 and/or 906.

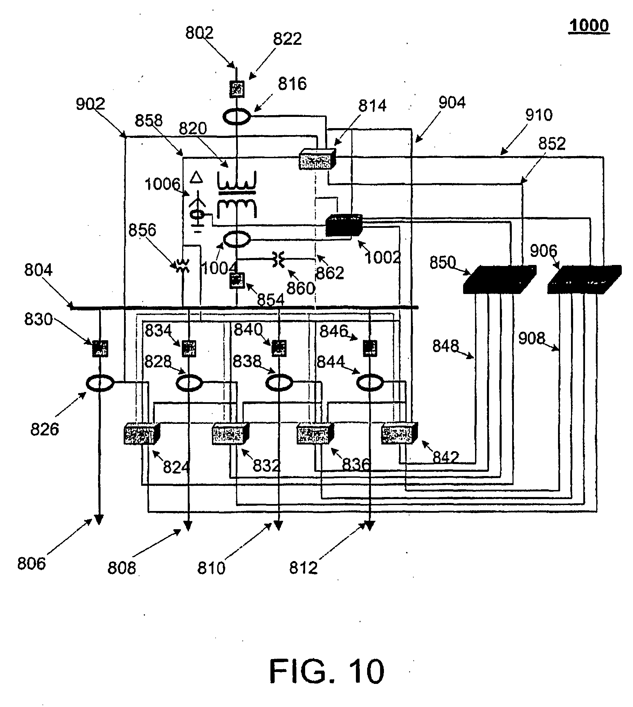

FIG. 10 is a circuit diagram of a substation protection system 1000 that includes a relay 1002 connected to a coil 1004 (located between the transformer 820 and the circuit breaker 854). The relay 1002 is further connected to a coil 1006 that is installed in a neutral winding of the transformer 820. The relay 1002 is also connected to the coil 816, the connections 858 and 862, and the communications hubs 850 and 906.

In the protection system 1000, as in the protection system 900 of FIG. 9, the primary relay 814 provides main differential protection of the transformer 820 (using the coil 816 and the feeder coils 826, 828, 838, and 844), and fast back-up protection for the first feeder 806 (using the connection 902 to the coil 826). Other connections in common with the protection system 900 also act in the manner described above.

The relay 1002 provides main differential protection for the bus 804 using an output of the coil 1004 in conjunction with outputs of the feeder coils 826, 828, 838, and 844. It should be understood that this protection is independent of the main differential protection provided to the transformer 820 by the primary relay 814.

The relay 1002 also provides main restricted ground fault protection for the transformer using the coil 1006. Additionally, the relay 1002 provides back-up differential protection for the power transformer 820.

Many variations on the systems of FIGS. 8-10 also may be implemented. For example, in the protection system 1000, the primary relay 814 may be connected to the coil 1004 so that the primary relay 814 may be used to provide fast back-up differential protection for the bus 804. Also, the connections 902 and 904 may be removed in the protection system 1000, and fast back-up protection for the four feeders 806, 808, 810, and 812 maybe provided in the manner described with respect to the protection system 800.

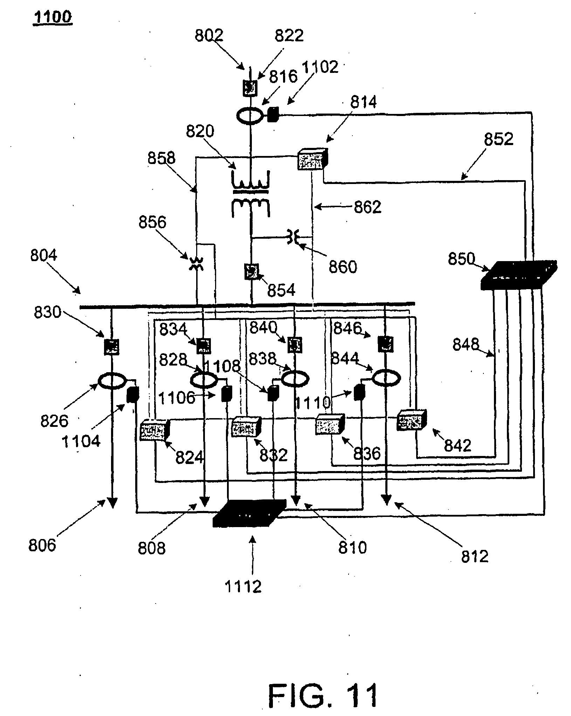

FIG. 11 is a circuit diagram of an electrical protection system 1100 in which all of the various relays are connected through analog-to-digital (A/D) converters (each which converts coil output signals to digital signals at the coil locations) to the communications hub 850. Specifically, the hub 850 receives the output of an A/D converter 1102 connected to the coil 816, an A/D converter 1104 connected to the coil 826, an A/D converter 1106 connected to the coil 828, an A/D converter 1108 connected to the coil 838, and an A/D converter 1110 connected to the coil 844. Outputs of the A/D converters 1104, 1106, 1108, and 1110, are congregated at a communications hub 1112, that is connected to the communications hub 850.

In FIG. 11, then, all of the current signals from the various coils are shared among the relays through the communications hubs 850 and 1112. As in FIGS. 8-10, the various relays remain connected to one another through the connections 858 and 862, and the voltage transformers 856 and 860 are also connected to the relays through the connections 858 and 862.

Thus, some of the functionality of the implementations of FIGS. 8-10 may be implemented in the protection system 1100. For example, the various relays may communicate with one another using the connections 858 and/or 868, and may obtain synchronization/timing information from the transformers 856 and/or 860.

In FIG. 11, current signals from all of the various coils are available to all of the various relays, through the communication hubs 850 and 1112, Moreover, associated voltage signals also are available to the various relays through the connections 858 and/or 862. As a result, main and back-up protection for components, including the transformer 820, the bus 804, and the feeders 806, 808, 810, and 812, may be designed in various ways, including many of the techniques described above.

For example, the first feeder relay 824 may serve as primary protection for the first feeder 806, and as back-up protection for the second feeder relay 832 (and thereby the second feeder 808), as in FIGS. 8-10. As another example, the primary relay 814 may be used to provide back-up protection to the first feeder relay 824 (and thereby the first feeder 806), as in FIGS. 9 and 10.

Other protection techniques, not explicitly described above, also may be implemented. For example, the third feeder relay 826 may be used to provide back-up protection for the first feeder relay 824. In fact, virtually any one or more of the various relays may be used to provide back-up protection for any one or more of the remaining relays.

By sharing all current signals over a digital communications medium, greater design flexibility may be afforded by the protection system 1100, compared to the protections systems of FIGS. 8-10. Moreover, more of the design, implementation, and maintenance of the protection system 1100 may be implemented in software, for example, at one or both of the communications hubs 850 and 906, or in separate computer hardware (not shown).

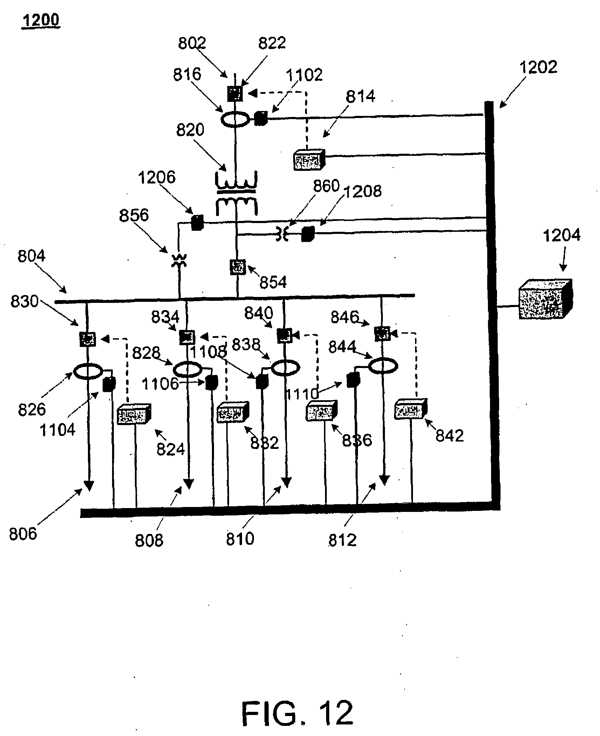

FIG. 12 is a circuit diagram of an electrical protection system 1200. In FIG. 12, the A/D converters 1102, 1104, 1106, 1108, and 1110 are all connected to a connection 1202, which in turn is connected to a computing resource 1204. Additionally, the voltage transformers 856 and 860 are connected to an A/D converter 1206 and an A/D converter 1208, respectively.

Thus, in FIG. 12, all voltage and current detection signals are digitized, and shared via the connection 1202 and the computing resource 1204. In comparison to the systems of FIGS. 8-11, it should be noted that the connections 858 and 862 are not included in the protection system 1200 (although they could be included as a back-up communications technique).

By sharing all of the various voltage and current detection signals at one central location, an even greater number of main and back-up protection designs may be implemented in computer software than in the protection system 1100 of FIG. 11. In FIG. 12, as opposed to FIGS. 8-11, direct connections between the various relays and their associated circuit breakers are illustrated. However, even the circuit breakers 822, 830, 834, 840, and 846 could be connected to connection 1202, and thereby controlled by the computer resource 1204.

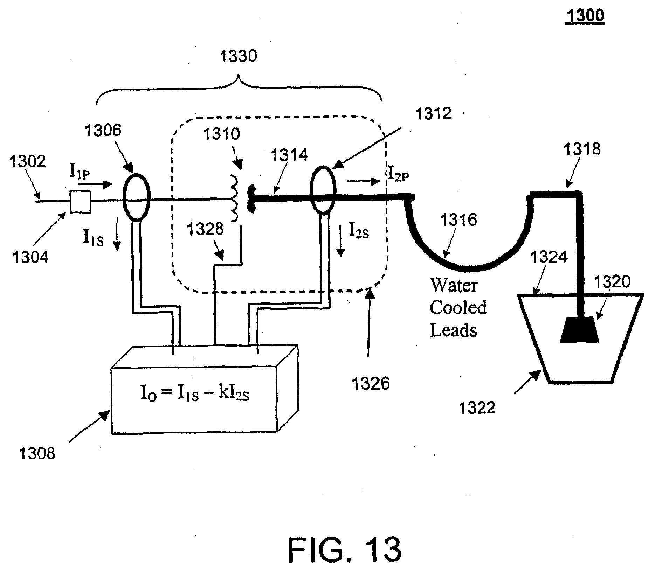

FIG. 13 is a circuit diagram of a first electric arc furnace protection system 1300. In FIG. 13, a primary input receives power on a primary conductor 1302 from, for example, an electric utility. A protection system, such as a circuit breaker 1304, is included in the electric arc furnace (EAF) protection system 1300, so as to interrupt power to the EAF upon detection of a fault by interrupting a path of a first primary current I_{1P} along the primary conductor 1302.

A first coil 1306 outputs a first secondary current I_{1S}, which is based on the primary current I_{1P}, and outputs the first secondary current I_{1S} to a protection device, such as a multi-function, three-phase, differential relay 1308 having multiple current and voltage inputs.

A transformer 1310 steps down a voltage associated with the first primary current I_{1P}, and correspondingly steps up the first primary current I_{1P} into a second primary current I_{2P}. The second primary current I_{2P} is detected by a second coil 1312 as a second secondary current I_{2S}, which also is input into the relay 1308. The second primary current I_{2P} may be within the range of, for example, 50kA - 80kA or more.

The second primary current I_{2P} flows on a conductor 1314 to water-cooled leads 1316, which, in turn, are connected to conducting arms 1318. The conducting arms 1318 are coupled to an electrode 1320 that is lowered into a furnace 1322 that is covered by a lid 1324.

In operation, the furnace typically contains, for example, steel scrap or other ferrous material. The electrode 1320 is lowered into the furnace 1322, and a current is passed through the electrode 1320 to form an arc. The arc generates enough heat to melt the scrap within the furnace 1322, so that the scrap may be turned into various types of special-quality steels (e.g., steel alloys) or ordinary-quality steels (e.g., non-alloy steels).

Variations of the above-described elements, and related elements, may be implemented. For example, multiple of transformers may be used in place of the single transformer 1310, so as to, for example, step down an initial voltage in multiple steps. In such a case, a medium-voltage transformer may be followed by a heavy duty furnace transformer. As another example, a bus-bar assembly may be used to provide an electrical connection between the water-cooled leads 1316 and the electrodes 1320.

A number of different secondary voltages may be applied to the electrode 1320, depending on, for example, the type of steel scrap being melted. In order to vary the secondary voltage, a tap position of the transformer 1310 may be changed. A current tap position at a given time is communicated to the relay 1308 by a tap signal 1328.

The transformer 1310 and the second coil 1312 may be enclosed within a vault 1326 that is designed to provide a secure and clean environment. Together, the vault 1326 and its internal elements (which also may include, for example, a bus-bar assembly, surge arresters, and secondary transformers (e.g., voltage transformers) that may be installed on the primary side of the transformer 1310 for metering and control), along with the first coil 1306, are included within a protection zone 1330 within which electrical faults may be detected by the relay 1308.

In the EAF protection system 1300, it should be understood that the relay 1308 operates in a manner similar to the various relays discussed above. For example, the relay 1308 determines whether the two secondary currents I_{1S} and I_{2S} are within some pre-determined differential of one anther. Specifically, the relay 1308 determines that I_{O} = I_{1S} - kI_{2S}, where I_{O} is generally zero and the constant "k" represents a level of error in the difference that will be accepted before the relay 1308 determines that a fault exists within the protection zone 1330.

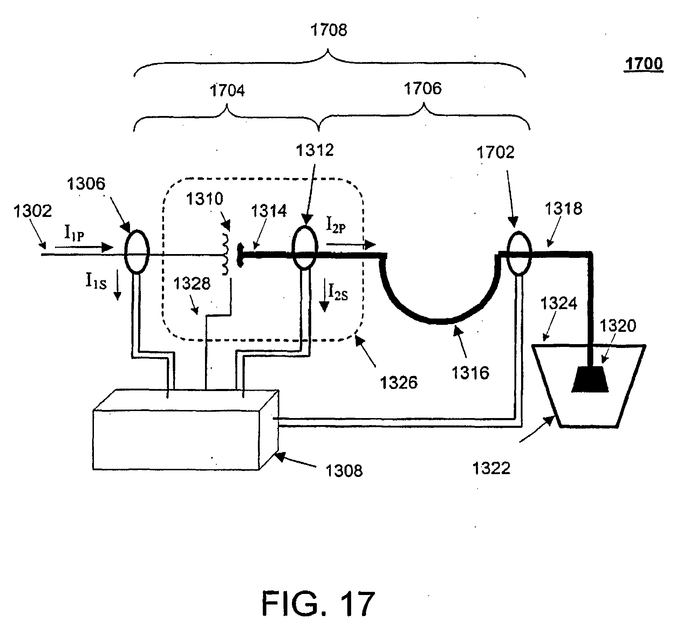

Although faults in the furnace transformer 1310 or otherwise associated with the vault 1326 are often time-consuming and expensive to repair, the circuit breaker 1304, by itself, often is only able to detect faults which occur upstream from the transformer 1310. By using the relay 1308 in conjunction with the two coils 1306 and 1312 (and/or with additional coils, as discussed below with respect to FIG. 17), fault protection also may be afforded to elements which are located at or downstream of the transformer 1310.

In using Rogowski coils as the coils 1306 and 1312, many or all of the advantages of Rogowski coils that are described above are imparted to the EAF protection system 1300, including low-cost and ease of installation, use, and maintenance. For example, the Rogowski coils can be designed in a split-core style, so that disconnection of conductors is not needed during installation. The Rogowski coils may be designed to be immune to external magnetic fields, to avoid saturation, and to react to low-level faults (thereby avoiding undue stress on the related components).

Moreover, by using a microprocessor-based relay as the relay 1308, current signals detected at the coils 1306 and/or 1312 may be manipulated in various ways. For example, digital current signals may be easily scaled within the relay 1308 using multipliers with scaling factors designed to develop an internal relay signal that matches a magnitude of the current being monitored. As another example, just as the signal magnitude can be scaled, a phase angle associated with a particular current signal can be shifted as needed using numerical manipulation in algorithms associated with the relay 1308. As a final example, a harmonic restraint algorithm may be implemented in the relay 1308 in order to avoid undesirable tripping of the circuit breaker 1304 in the event of energization inrush currents (i.e., currents which result when the transformer is initially switched on).

In using such a microprocessor-based relay 1308, a computing resource, such as, for example, a personal computer, maybe used during operation of the relay 1308 to observe the calculated protection quantities in real time. Such real time observations may permit fine calibration adjustments to be made, even after installation, in order to achieve high sensitivity.

Also, as mentioned above, a tap position of the transformer 1310 may be changed during operation for the purpose of varying the secondary voltage delivered by the transformer 1310. During such changes, currents in the system 1300 may temporarily reach levels that might erroneously be determined to be fault events. Moreover, once the tap position change has taken place, the currents will be altered, requiring corresponding changes to, for example, the relay 1308.

Performing such tap position changes may be performed in the EAF protection system 1300 using the tap position signal 1328. For example, the tap position signal 1328 may be passed to the relay 1308 through a Programmable Logic Controller ("PLC"), or through some other technique for communicating the tap position information to the relay 1308. The relay 1308 may store (or otherwise have access to) a look-up table of winding rations of the transformer 1310 at the transformer's various tap positions, and may use the look-up table to correct the current signals received from the coils 1306 and 1312 during and after tap position changes. As a result, the coil/relay combination accounts for the different winding ratios of the transformer 1310, and restraint settings of the relay 1308 may be set with a high sensitivity.

In the EAF protection system 1300, Rogowski coils may provide metering-class accuracy in measurements of their output current signals. For example, Rogowski coils can be designed to measure currents to better than 0.1% precision, with a typical precision of 1%-3% or better. Additionally, because they do not typically saturate, the Rogowski coils offer a wide measurement range, such as, for example, from several amps to several hundred thousand amps. As a result, such coils may be used to measure currents having a large DC component. Also, such Rogowski coils may operate over a wide frequency range, such as from approximately 0.1 Hz to over 1 MHz. Rogowski coils also maybe designed to provide a bandpass frequency response of up to approximately 200 MHz or more.

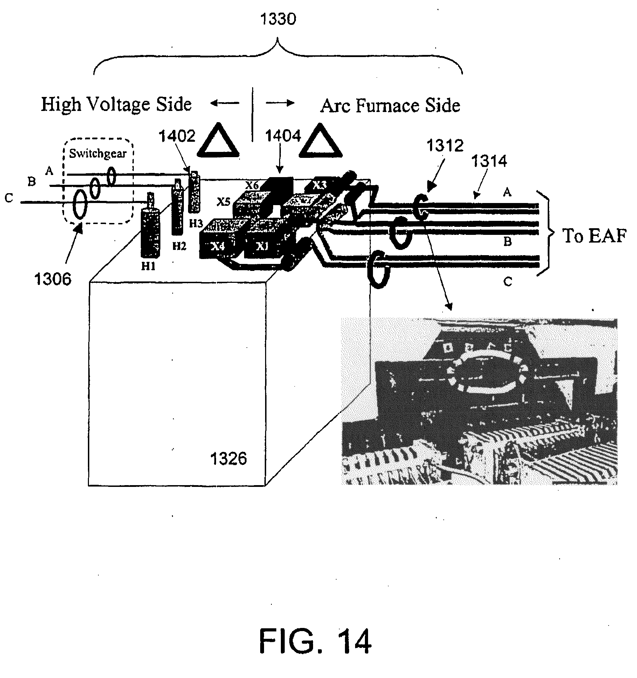

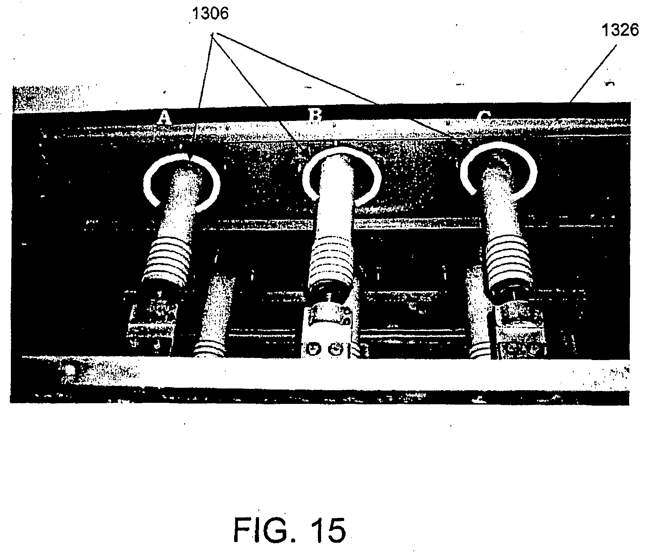

FIG. 14 illustrates an implementation of the EAF protection system 1300 of FIG. 13. Generally speaking, the coils 1306 and 1312 may be installed in a number of locations. For example, the coils 1306 and 1312 may be mounted on a wall of the vault 1326 at a point where the bus penetrates the wall. In FIG. 14, the coils 1306 are located around conductors 1302, which are connected to bushings 1402 (labeled h1-h3), and mounted on a switchgear device 1404 that is responsible for switching the transformer 1310 (see FIG. 15 and the associated discussion). The coils 1312 are connected to low-voltage terminals 1406 (labeled X1-X6). In FIG. 14, the coils 1306 are configured in a manner similar to that illustrated in FIGS. 2 and 3, with each phase of the conductor(s) 1302 enclosed by a separate one of the coils 1306. The coils 1306 and 1312 may be customized to accommodate the conductors associated with the vault 1326 in ways other than that illustrated in FIG. 14.

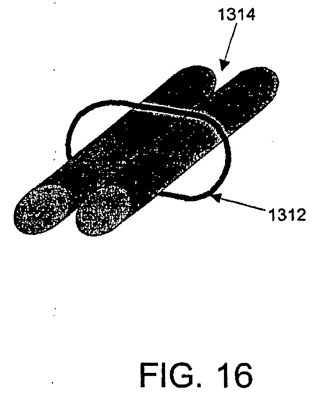

FIG. 15 illustrates of a configuration of the conductors 1302 and coils 1306, where the coils 1306 are integrated into the wall of the vault 1326. FIG. 16 illustrates a coil 1312 configured with two of the conductors 1314 contained within a single coil 1312.

FIG. 17 illustrates an EAF protection system 1700 that is similar to the system 1300 of FIG. 13 but includes a third coil 1702 associated with conducting arm(s) 1318 and connected to the relay 1308. As a result, the EAF protection system 1700 provides multiple, redundant, and/or independent protection zones for the various associated EAF components.

For example, a first protection zone 1704 includes all components between coil 1306 and 1310 (e.g., the transformer 1310). A second protection zone 1706 includes all components located between the coil 1312 and the coil 1702 (e.g., the water-cooled leads 1316). Finally, a third protection zone 1708 includes all components located between the coil 1306 and the coil 1702.

Similar to various protection systems described above, the relay 1308 may implement three distinct algorithms that each correspond to one of the protection zones 1704, 1706, and 1708. As a result, the protection zone 1704 is independent of a malfunction of the coil 1702, while the protection zone 1706 is independent of a malfunction of the coil 1306. Finally, the protection zone 1708 is independent of a malfunction of the coil 1312.

Moreover; the EAF protection system 1700 allows both a location and a magnitude of a fault to be determined. Also, with respect to the protection zone 1706, there is no need for information about a position of the tap associated with the transformer 1310. As a result, the protection algorithm for the protection zone 1706 may be simplified with respect to a corresponding algorithm for the protection zone 1704, and, as a result, the relay 1308 may be set more sensitively.

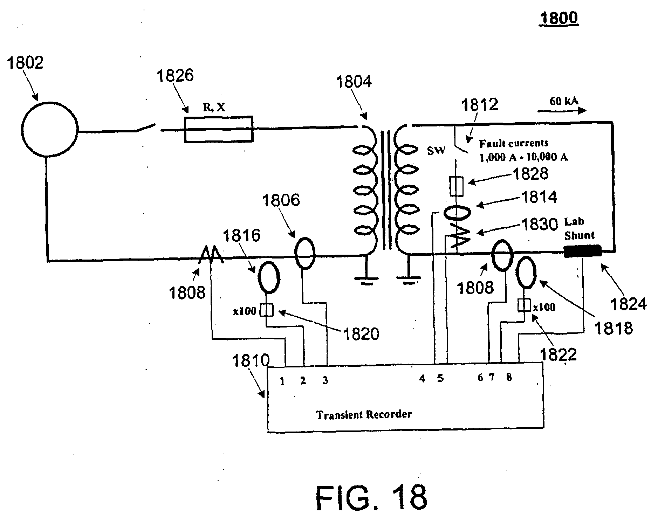

FIG. 18 is a circuit diagram of a first test circuit for testing an electrical protection system. In FIG. 18, a source 1802 supplies power to a transformer 1804. Specifically, the source 1802 supplies a current having a value of, for example, 2,500 A, which is stepped up by the transformer 1804 to a current having a value of for example, 60 kA.

A coil 1806 and a coil 1808 are used to detect these currents, and are in communication with channels 3 and 6 of a transient recorder 1810, which may be associated with, or part of, a differential relay such as those described above. A fault (short circuit) is initiated in the test circuit 1800 using a switch 1812, where fault currents may be in the range of, for example, 1kA - 10kA, and the coils 1806 and 1808 are tested through the range of these fault currents.

A coil 1814 measures differential current for comparison with the output of the coils 1806 and 1808, and communicates with channel 4 of the recorder 1810. A coil 1816 and a coil 1818 are connected to external conductors (not shown) and are used to measure the effects of currents through these external conductors when conducting high currents. The outputs of the coils 1816 and 1818 are multiplied by a multiplier 1820 and a multiplier 1822 (for example, by 100x), respectively, and input into, respectively, channels 2 and 7 of the recorder 1810.

A lab shunt 1824 is used to protect against any undesired or unsafe currents, and is connected to channel 8 of the recorder 1810. A resistor 1826 is connected to the source 1802 in order to limit a current output by the source 1802, while a resistor 1828 is connected to the switch 1812 and used in a similar manner.

Finally, a current transformer 1830 and a current transformer 1832 are used as current sensors that produce current measurements against which the results of the measurements of the various coils may be compared. The current transformers 1830 and 1832 are connected to channels 1 and 5 of the recorder 1810, respectively.

In the test circuit 1800, no external shielding was applied to the various coils, in order to more fully test extreme application conditions (such as might be found in an EAF).

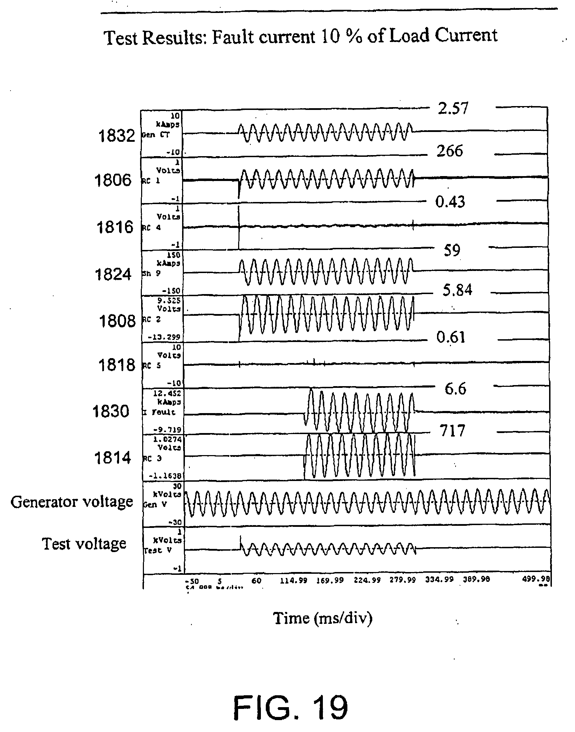

FIG. 19 is a graph of test results of the test circuit 1800 of FIG. 18. In FIG. 19, a fault current is used that is approximately 10% of the load current, and resulting waveforms for the various components are illustrated, as labeled.

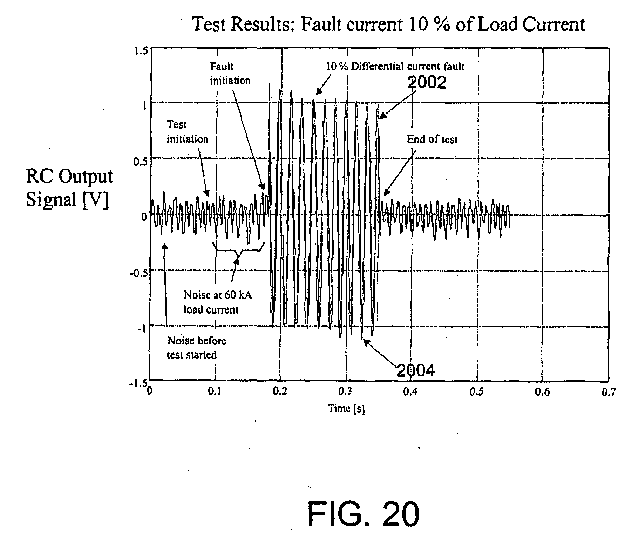

FIG. 20 is a first graph of a comparison of waveforms illustrated in FIG. 19. Specifically, in FIG. 20, a first waveforms 2002 represents a waveform associated with the coil 1814, which directly measures the fault current, by virtue of its connection to the switch 1812. A second waveform 2004 represents a waveform associated with a difference between the wavefonns associated with the coils 1806 and 1808 (scaled by the transformer ratio). The second waveform 2002 contains a noise signal coming from unshielded channels of the recorder 1810. This noise signal is virtually identical after the test as before, and is therefore not likely to have been contributed by any effect associated with one of the various coils.

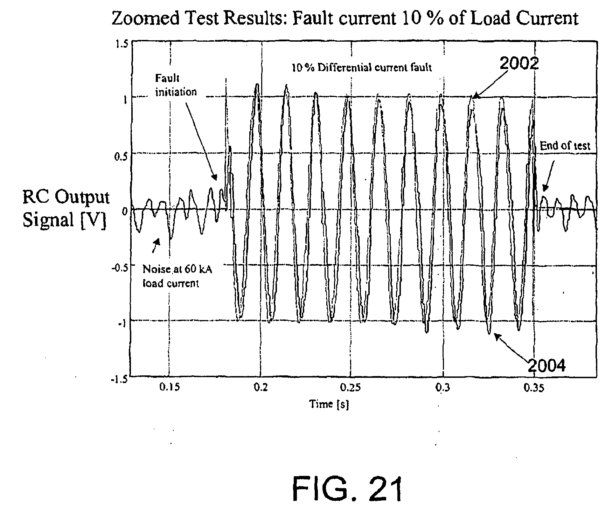

FIG. 21 is a second graph of the comparison of waveforms illustrated in FIG. 20. In FIG. 21, the waveform comparison is magnified by 10x for the sake of clarity.

In FIGS. 20 and 21, it is apparent that the two waveforms 2002 and 2004 are virtually identical, thereby establishing an accuracy of the above-described techniques for detecting fault currents using a differential relay and Rogowski coils.

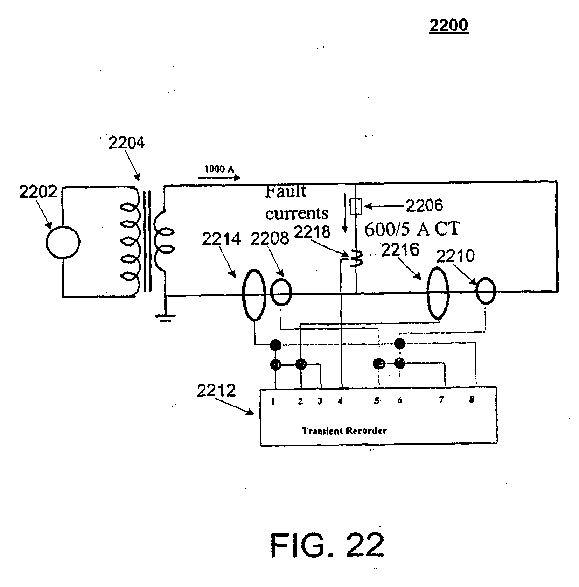

FIG. 22 is a circuit diagram of a second test circuit 2200 for testing an electrical protection system. In FIG. 22, a power source 2202 supplies power to a transformer 2204. A fault current is initiated using a circuit element 2206, which may be, for example, a current-limiting resistor. A first round coil 2208 and a second round coil 2210 detect currents at their respective locations and communicate results to a recorder 2212. In addition, a first oval coil 2214 and a second oval coil 2216 detect currents at their respective locations and communicate results to the recorder 2212. Finally, a current transformer 2218 measures the fault current for comparison to the results calculated based on the coils 2208, 2210, 2214, and 2216. The current transformer 2218 may be, for example, a 6005 A current transformer.

Channel 1 of the recorder 2212 detects an output of the first oval coil 2214, channel 2 of the recorder 2212 detects an output of the second oval coil 2216, and channel 3 determines a difference of the two oval coils 2214 and 2216. Channel 4 of the recorder 2212 detects an output of the current transformer 2218. Channel 5 detects an output of the first round coil 2208, channel 6 detects an output of the second round coil 2210, and channel 7 determines a difference between the first round coil 2208 and the second round coil 2210. Finally, channel 8 determines a difference between the first oval coil 2214 and the second round coil 2210.

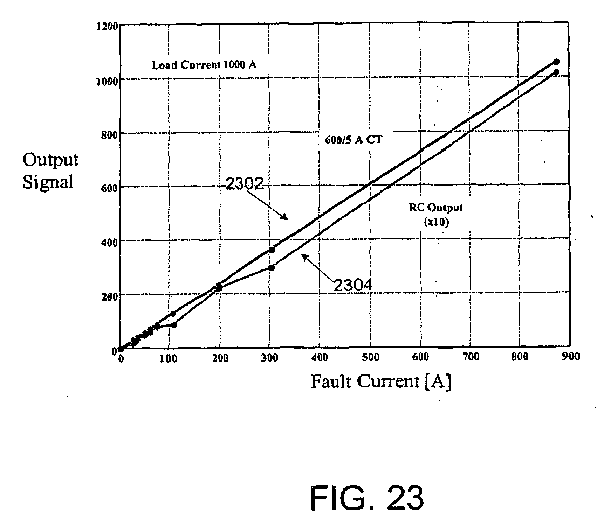

FIG. 23 is a graph demonstrating a result of a simulation of the test circuit 2200 of FIG. 22. In FIG. 23, a 1 kA load current was used, along with fault levels in the range of 10 A to 850 A. A first line 2302 represents the resulting measurements of the current transformer 2218, while a second line 2304 represents the resulting measurements of the various coils (multiplied by a factor of 10). As is evident in FIG. 23, current measurements based on the various coils of FIG. 22 are highly sensitive and responsive to the tested fault conditions.

In conclusion, the above description illustrates various protection systems for electrical systems such as, for example, spot networks, substation power dividers, and electrical arc furnaces. The various protection systems may be designed and used to detect and clear faults that may occur within the electrical systems. For example, a pair of Rogowski coils may be used to detect current along a conductors at their respective locations on the conductors, and to output corresponding signals to a multi-function, differential relay having multiple voltage and current inputs. By comparing the signals from the Rogowski coils, the differential relay may determine whether a fault exists at some point along the conductors and between the pair of Rogowski coils. Further, the relay may then, in response to the fault, trip a circuit breaker or other network protection device to correct the fault.

Moreover, when multiple relays are included, at least one of the relays may be in communication with one or more of the other relays, and/or with one or more of the Rogowski coils associated with one of the other relays. In this way, many different protection schemes may be designed and used, including differential schemes and overcurrent sensing schemes. Additionally, each of the various relays can be designed to provide very fast back-up functionality for one or more of the other relays.

A number of implementations have been described. Nevertheless, it will be understood that various modifications may be made. Accordingly, other implementations are within the scope of the following claims.

## Claims

1. An electrical protection system (100) comprising:
a first Rogowski coil (108; 408) positioned to detect a first current and generate a first current measurement;
a second Rogowski coil (110; 420) positioned to detect a second current and generate a second current measurement, wherein a first protection zone (104) is defined between the first Rogowski coil (108; 408) and the second Rogowski coil (110; 420); and
a first protection device (116; 414) operable to determine the existence of a first fault that is associated with a first circuit element within the first protection zone (104) from the difference between the first current measurement and the second current measurement.

2. The system of claim 1, wherein the second Rogowski coil (110) defines a second protection zone (118) containing a second circuit element, and the first protection device (116) is operable to implement a second protection scheme to detect a second fault associated with the second circuit element.

3. The system of claim 2, wherein the second protection scheme includes an overcurrent protection scheme.

4. The system of claim 3, wherein the first protection device (116) is operable to integrate protection of the first protection zone (104) and the second protection zone (118).

5. The system of claim 4, wherein the first protection device (116) is operable to provide a third protection zone (120) that serves as a back-up protection zone to the first protection zone (104) and the second protection zone (118).

6. The system of claim 1, further comprising a first circuit breaker operable to receive a first instruction from the first protection device (116; 414) and interrupt the first current in response to the first instruction.

7. The system of claim 6, wherein the first Rogowski coil (408), the second Rogowski coil (420), the first protection device (414), and the first circuit breaker are all associated with a first network unit (402) of an electrical network system (400).

8. The system of claim 7, further comprising:
a third Rogowski coil positioned to detect a third current and generate a third current measurement;
a fourth Rogowski coil positioned to detect a fourth current and generate a fourth current measurement, wherein a second protection zone is defined based on a positioning of the third Rogowski coil and the fourth Rogowski coil; and
a second protection device operable to determine from the third current measurement and the fourth current measurement, the existence of a second fault that is associated with a second circuit element within the second protection zone.

9. The system of claim 8, further comprising a second circuit breaker operable to receive a second instruction from the second protection device and interrupt the third current in response to the second instruction.

10. The system of claim 9, wherein the third Rogowski coil, the fourth Rogowski coil, the second protection device, and the second circuit breaker are all associated with a second network unit (404) of the electrical network system (400).

11. The system of claim 10, further comprising a communications link (476) between the first protection device (414) and the second protection device (416).

12. The system of claim 11, wherein the first network unit (402) and the second network unit (404) are connected through a bus connection (462).

13. The system of claim 12, wherein the first protection device (414) and the second protection device (416) share the first current measurement, the second current measurement, the third current measurement, and the fourth current measurement over the communications link (476), and use the current measurements to determine that a bus fault associated with the bus connection (462) exists.

14. The system of claim 12, wherein the third Rogowski coil, the fourth Rogowski coil, and the second circuit breaker are connected to the first protection device.

15. The system of claim 14, wherein:
the first protection device is operable to receive a malfunction notification indicating a malfunction of the second protection device, and
the first protection device is operable to receive the third current measurement and the fourth current measurement and determine that the second fault exists based on the current measurement.

16. The system of claim 15, wherein the first protection device is operable to operate the second circuit breaker in response to the second fault.

17. The system of claim 1, further comprising a third Rogowski coil positioned to detect a third current and generate a third current measurement, wherein a second protection zone is defined based on a positioning of the first Rogowski coil and the third Rogowski coil, and a third protection zone is defined based on a positioning of the second Rogowski coil and the third Rogowski coil.

18. The system of claim 17, wherein the first protection device is operable to determine from the first current measurement and the third current measurement that a second fault exists that is associated with a second circuit element within the second protection zone.

19. The system of claim 17, wherein the first protection device is operable to determine from the second current measurement and the third current measurement that a third fault exists that is associated with a third circuit element within the third protection zone.

20. The electrical protection system of claim 1, wherein the first Rogowski coil (408) and the second Rogowski coil (420) are included in a first grouping of two or more coils, and further comprising a second grouping of two or more Rogowski coils and a third grouping of two or more Rogowski coils, wherein:
the first grouping of Rogowski coils (408, 420) is operable to generate the first current measurement and the second current measurement;
the second grouping of Rogowski coils (410, 422) is operable to generate second current signals associated with a second network unit (404) of the electrical system (400); and
the third grouping of Rogowski coils (412, 424) is operable to generate third current signals associated with a third network unit (406) of the electrical system (400).

21. The electrical protection system of claim 1, wherein the
first Rogowski coil is associated with a primary feeder of an electrical system and operable to sense a primary current in the primary feeder and the
first protection device is operable to receive a first current signal from the first Rogowski coil, the electrical protection device further comprising:
secondary Rogowski coils, each associated with a corresponding secondary feeder of the electrical system and operable to sense a corresponding secondary current in the secondary feeder;
secondary protection devices, each operable to receive a secondary current signal from an associated secondary Rogowski coil; and
a communication link operable to transmit the first current signal and the secondary current signals between the first protection device and the secondary protection devices.

22. The electrical protection system of claim 1, wherein:
the first Rogowski coil is positioned along a first conductor and operable to measure a first current in the first conductor to generate the first current measurement, where the first conductor is part of an electric arc furnace (EAF) system; and
the protection device is further operable to use the first current measurement in determining that a fault exists in the EAF system.

23. A method for protecting an electrical system, the method comprising:
measuring a first current through a first conductor (102) in an electrical system (100; 400) using a first Rogowski coil (108; 408) positioned along the first conductor (102);
outputting a first current signal corresponding to the first current;
measuring a second current through a second conductor in (106) the electrical system (100; 400) using a second Rogowski coil (110; 420) positioned along the second conductor (106);
outputting a second current signal corresponding to the second current;
providing the first current signal and the second current signal to a first protection device (116; 414); and,
determining the existence of a first fault that is associated with a first circuit element within a first protection zone (104) defined between the first Rogowski coil (108; 408) and the second Rogowski coil (110; 420) from the difference between the first current measurement and the second current measurement.

24. The method of claim 23, further comprising:
providing overcurrent protection to a second circuit element that is positioned within a second protection zone (118) of the electrical system (100; 400) that is defined by a position of the second Rogowski coil (110; 420), using the first protection device (116; 414).

25. The method of claim 24, comprising:
providing back-up protection within a third protection zone (120) that includes the first protection zone (104) and the second protection zone (118), using the first protection device (116).

26. The method of claim 23, wherein the first conductor and second conductor are included within a first network unit (402) of the electrical system (400), further comprising:
measuring a third current through a third conductor in the electrical system (400) using a third Rogowski coil (410) positioned along the third conductor;
outputting a third current signal corresponding to the third current;
measuring a fourth current through a fourth conductor in the electrical system (400) using a fourth Rogowski coil (422) positioned along the fourth conductor;
outputting a fourth current signal corresponding to the fourth current; and
providing the third current signal and the fourth current signal to a second protection device (416).

27. The method of claim 26, wherein the third conductor and the fourth conductor are included within a second network unit (404) of the electrical system (400).

28. The method of claim 27, further comprising determining, based on the third current signal and the fourth current signal, that a fault associated with the second network unit (404) exists.

29. The method of claim 27, wherein the first protection device (414) and the second protection device (416) are connected by a communications link (476);
the electrical system comprises a connection bus (462) connecting the first network unit (402) to the second network unit (404), and
the connection bus (462) is connected to the second conductor and the fourth conductor between the first Rogowski coil (408) and the second Rogowski coil (420).

30. The method of claim 29, further comprising:
transmitting the first current signal and the second current signal from the first protection device (414) to the second protection device (416);
transmitting the third current signal and the fourth current signal from the second protection device (416) to the first protection device (414); and
determining that a fault associated with the connection bus (462)exists, based on the first current signal, the second current signal, the third current signal, and the fourth current signal.

31. The method of claim 26, further comprising:
transmitting the third current signal from the third Rogowski coil to the first protection device, through a first connection;
transmitting the fourth current signal from the fourth Rogowski coil to the first protection device, through a second connection; and
determining, at the first protection device and based on the third current signal and the fourth current signal, that a fault associated with the second network unit exists.

32. The method of claim 23, further comprising:
measuring a third current through a third conductor in the electrical system using a third Rogowski coil positioned along the third conductor;
outputting a third current signal corresponding to the third current; and
inputting the third current signal at the first protection device.

33. The method of claim 32, further comprising determining that a fault exists between the first Rogowski coil and the third Rogowski coil based on the first current signal and the third current signal.

34. The method of claim 32, further comprising determining that a fault exists between the third Rogowski coil and the second Rogowski coil based on the third current signal and the second current signal.

## Patentansprüche

1. Elektrisches Schutzsystem (100), Folgendes umfassend:
eine erste Rogowskispule (108; 408), angeordnet, um einen ersten Strom zu erfassen und eine erste Strommessung zu erzeugen;
eine zweite Rogowskispule (110; 420), angeordnet, um einen zweiten Strom zu erfassen und eine zweite Strommessung zu erzeugen, wobei eine erste Schutzzone (104) zwischen der ersten Rogowskispule (108; 408) und der zweiten Rogowskispule (110; 420) definiert ist; und
eine erste Schutzvorrichtung (116; 414), funktionsfähig, das Vorliegen eines ersten Fehlers in Verbindung mit einem ersten Stromkreiselement in der ersten Schutzzone (104) aus der Differenz zwischen der ersten Strommessung und der zweiten Strommessung zu bestimmen.

2. System nach Anspruch 1, wobei die zweite Rogowskispule (110) eine zweite Schutzzone (118) definiert, die ein zweites Stromkreiselement enthält, und die erste Schutzvorrichtung (116) funktionsfähig ist, ein zweites Schutzkonzept zu implementieren, um einen zweiten Fehler in Verbindung mit dem zweiten Stromkreiselement zu erfassen.

3. System nach Anspruch 2, wobei das zweite Schutzkonzept ein Überstromschutzkonzept enthält.

4. System nach Anspruch 3, wobei die erste Schutzvorrichtung (116) funktionsfähig ist, Schutz der ersten Schutzzone (104) und der zweiten Schutzzone (118) zu bieten.

5. System nach Anspruch 4, wobei die erste Schutzvorrichtung (116) funktionsfähig ist, eine dritte Schutzzone (120) bereitzustellen, die als eine Reserveschutzzone für die erste Schutzzone (104) und die zweite Schutzzone (118) dient.

6. System nach Anspruch 1, ferner umfassend einen ersten Leitungsschutzschalter, funktionsfähig, eine erste Anweisung von der ersten Schutzvorrichtung (116; 414) zu erhalten und den ersten Strom als Reaktion auf die erste Anweisung zu unterbrechen.

7. System nach Anspruch 6, wobei die erste Rogowskispule (408), die zweite Rogowskispule (420), die erste Schutzvorrichtung (414) und der erste Leitungsschutzschalter alle mit einer ersten Netzeinheit (402) eines elektrischen Netzsystems (400) verknüpft sind.

8. System nach Anspruch 7, ferner umfassend:
eine dritte Rogowskispule, angeordnet, um einen dritten Strom zu erfassen und eine dritte Strommessung zu erzeugen;
eine vierte Rogowskispule, angeordnet, um einen vierten Strom zu erfassen und eine vierte Strommessung zu erzeugen, wobei eine zweite Schutzzone auf der Grundlage einer Positionierung der dritten Rogowskispule und der vierten Rogowskispule definiert ist; und
eine zweite Schutzvorrichtung, funktionsfähig, um aus der dritten Strommessung und der vierten Strommessung das Vorliegen eines zweiten Fehlers in Verbindung mit einem zweiten Stromkreiselement in der zweiten Schutzzone zu bestimmen.

9. System nach Anspruch 8, ferner umfassend einen zweiten Leitungsschutzschalter, funktionsfähig, eine zweite Anweisung von der zweiten Schutzvorrichtung zu erhalten, und als Reaktion auf die zweite Anweisung den dritten Strom zu unterbrechen.

10. System nach Anspruch 9, wobei die dritte Rogowskispule, die vierte Rogowskispule, die zweite Schutzvorrichtung und der zweite Leitungsschutzschalter alle mit einer zweiten Netzeinheit (404) des elektrischen Netzsystems (400) verknüpft sind.

11. System nach Anspruch 10, ferner umfassend eine Kommunikationsverbindung (476) zwischen der ersten Schutzvorrichtung (414) und der zweiten Schutzvorrichtung (416).

12. System nach Anspruch 11, wobei die erste Netzeinheit (402) und die zweite Netzeinheit (404) über eine Busverbindung (462) miteinander verbunden sind.

13. System nach Anspruch 12, wobei die erste Schutzvorrichtung (414) und die zweite Schutzvorrichtung (416) die erste Strommessung, die zweite Strommessung, die dritte Strommessung und die vierte Strommessung über die Kommunikationsverbindung (476) austauschen und die Strommessungen nutzen, um zu bestimmen, dass ein Busfehler in Verbindung mit der Busverbindung (462) vorliegt.

14. System nach Anspruch 12, wobei die dritte Rogowskispule, die vierte Rogowskispule und der zweite Leitungsschutzschalter mit der ersten Schutzvorrichtung verbunden sind.

15. System nach Anspruch 14, wobei:
die erste Schutzvorrichtung funktionsfähig ist, eine Fehfunktionsmitteilung zu empfangen, die eine Fehlfunktion der zweiten Schutzvorrichtung andeutet, und
die erste Schutzvorrichtung funktionsfähig ist, die dritte Strommessung und die vierte Strommessung zu empfangen und auf der Grundlage der Strommessung zu bestimmen, dass der zweite Fehler vorliegt.

16. System nach Anspruch 15, wobei die erste Schutzvorrichtung funktionsfähig ist, als Reaktion auf den zweiten Fehler den zweiten Leitungsschutzschalter zu betätigen.

17. System nach Anspruch 1, ferner umfassend eine dritte Rogowskispule, angeordnet, um einen dritten Strom zu erfassen und eine dritte Strommessung zu erzeugen, wobei eine zweite Schutzzone auf der Grundlage einer Positionierung der ersten Rogowskispule und der dritten Rogowskispule definiert ist und eine dritte Schutzzone auf der Grundlage einer Positionierung der zweiten Rogowskispule und der dritten Rogowskispule definiert ist.

18. System nach Anspruch 17, wobei die erste Schutzvorrichtung funktionsfähig ist, aus der ersten Strommessung und der dritten Strommessung zu bestimmen, dass ein zweiter Fehler in Verbindung mit einem zweiten Stromkreiselement in der zweiten Schutzzone vorliegt.

19. System nach Anspruch 17, wobei die erste Schutzvorrichtung funktionsfähig ist, aus der zweiten Strommessung und der dritten Strommessung zu bestimmen, dass ein dritter Fehler in Verbindung mit einem dritten Stromkreiselement in der dritten Schutzzone vorliegt.

20. Elektrisches Schutzsystem nach Anspruch 1, wobei die erste Rogowskispule (408) und die zweite Rogowskispule (420) in einer ersten Gruppierung aus zwei oder mehr Spulen enthalten sind, und ferner umfassend eine zweite Gruppierung aus zwei oder mehr Rogowskispulen sowie eine dritte Gruppierung aus zwei oder mehr Rogowskispulen, wobei:
die erste Gruppierung von Rogowskispulen (408, 420) funktionsfähig ist, die erste Strommessung und die zweite Strommessung zu erzeugen;
die zweite Gruppierung von Rogowskispulen (410, 422) funktionsfähig ist, zweite Stromsignale zu erzeugen, die mit einer zweiten Netzeinheit (404) des Elektrosystems (400) verknüpft sind; und
die dritte Gruppierung von Rogowskispulen (412, 424) funktionsfähig ist, dritte Stromsignale zu erzeugen, die mit einer dritten Netzeinheit (406) des Elektrosystems (400) verknüpft sind.

21. Elektrisches Schutzsystem nach Anspruch 1, wobei die
erste Rogowskispule mit einer ersten Speisung eines Elektrosystem verknüpft ist und funktionsfähig ist, einen ersten Strom in der ersten Speisung zu erfassen, und die
erste Schutzvorrichtung funktionsfähig ist, ein erstes Stromsignal von der ersten Rogowskispule zu empfangen, wobei die elektrische Schutzvorrichtung ferner Folgendes umfasst:
zweite Rogowskispulen, jeweils verbunden mit einer entsprechenden zweiten Speisung des Elektrosystems und funktionsfähig, einen entsprechenden zweiten Strom in der zweiten Speisung zu erfassen;
zweite Schutzvorrichtungen, jeweils funktionsfähig, ein zweites Stromsignal von einer damit verknüpften zweiten Rogowskispule zu empfangen; und
eine Kommunikationsverbindung, funktionsfähig, das erste Stromsignal und die zweiten Stromsignale zwischen der ersten Schutzvorrichtung und den zweiten Schutzvorrichtungen zu übermitteln.

22. Elektrisches Schutzsystem nach Anspruch 1, wobei:
die erste Rogowskispule entlang eines ersten Leiters angeordnet ist und funktionsfähig ist, einen ersten Strom in dem ersten Leiter zu messen, um die erste Strommessung zu erzeugen, wobei der erste Leiter Teil eines Elektrolichtbogenofen(electric arc furnace -EAF)-Systems ist; und
die Schutzvorrichtung ferner funktionsfähig ist, die erste Strommessung einzusetzen, um zu bestimmen, dass in dem EAF-System ein Fehler vorliegt.

23. Verfahren zum Schützen eines Elektrosystems, wobei das Verfahren Folgendes umfasst:
Messen eines ersten Stroms durch einen ersten Leiter (102) in einem Elektrosystem (100; 400) unter Einsatz einer ersten Rogowskispule (108; 408), die entlang des ersten Leiters (102) angeordnet ist;
Ausgeben eines ersten Stromsignals, das dem ersten Strom entspricht;
Messen eines zweiten Stroms durch einen zweiten Leiter (106) in dem Elektrosystem (100; 400) unter Einsatz einer zweiten Rogowskispule (110; 420), die entlang des zweiten Leiters (106) angeordnet ist;
Ausgeben eines zweiten Stromsignals, das dem zweiten Strom entspricht;
Bereitstellen des ersten Stromsignals und des zweiten Stromsignals an eine erste Schutzvorrichtung (116; 414); und,
Bestimmen des Vorliegens eines ersten Fehlers in Verbindung mit einem ersten Stromkreiselement in einer ersten Schutzzone (104), die zwischen der ersten Rogowskispule (108; 408) und der zweiten Rogowskispule (110; 420) definiert ist, aus der Differenz zwischen der ersten Strommessung und der zweiten Strommessung.

24. Verfahren nach Anspruch 23, ferner umfassend:
Bereitstellen eines Überstromschutzes für ein zweites Stromkreiselement, angeordnet in einer zweiten Schutzzone (118) des Elektrosystems (100; 400), definiert durch eine Position der zweiten Rogowskispule (110; 420), unter Einsatz der ersten Schutzvorrichtung (116; 414).

25. Verfahren nach Anspruch 24, umfassend:
Bereitstellen von Reserveschutz in einer dritten Schutzzone (120), die die erste Schutzzone (104) und die zweite Schutzzone (118) enthält, unter Einsatz der ersten Schutzvorrichtung (116).

26. Verfahren nach Anspruch 23, wobei der erste Leiter und der zweite Leiter in einer ersten Netzeinheit (402) des Elektrosystems (400) enthalten sind, ferner Folgendes umfassend:
Messen eines dritten Stroms durch einen dritten Leiter in dem Elektrosystem (400) unter Einsatz einer dritten Rogowskispule (410), die entlang des dritten Leiters angeordnet ist;
Ausgeben eines dritten Stromsignals, das dem dritten Strom entspricht;
Messen eines vierten Stroms durch einen vierten Leiter in dem Elektrosystem (400) unter Einsatz einer vierten Rogowskispule (422), die entlang des vierten Leiters angeordnet ist;
Ausgeben eines vierten Stromsignals, das dem vierten Strom entspricht; und
Bereitstellen des dritten Stromsignals und des vierten Stromsignals an eine zweite Schutzvorrichtung (416).

27. Verfahren nach Anspruch 26, wobei der dritte Leiter und der vierte Leiter in einer zweiten Netzeinheit (404) des Elektrosystems (400) enthalten sind.

28. Verfahren nach Anspruch 27, ferner umfassend das Bestimmen auf der Grundlage des dritten Stromsignals und des vierten Stromsignals, dass ein Fehler in Verbindung mit der zweiten Netzeinheit (404) vorliegt.

29. Verfahren nach Anspruch 27, wobei die erste Schutzvorrichtung (414) und die zweite Schutzvorrichtung (416) über eine Kommunikationsverbindung (476) miteinander verbunden sind;
das Elektrosystem einen Verbindungsbus (462) umfasst, der die erste Netzeinheit (402) mit der zweiten Netzeinheit (404) verbindet, und
der Verbindungsbus (462) zwischen der ersten Rogowskispule (408) und der zweiten Rogowskispule (420) mit dem zweiten Leiter und dem vierten Leiter verbunden ist.

30. Verfahren nach Anspruch 29, ferner umfassend:
Übermitteln des ersten Stromsignals und des zweiten Stromsignals von der ersten Schutzvorrichtung (414) zu der zweiten Schutzvorrichtung (416);
Übermitteln des dritten Stromsignals und des vierten Stromsignals von der zweiten Schutzvorrichtung (416) zu der ersten Schutzvorrichtung (414); und
Bestimmen, auf der Grundlage des ersten Stromsignals, des zweiten Stromsignals, des dritten Stromsignals und des vierten Stromsignals, dass ein Fehler in Verbindung mit dem Verbindungsbus (462) vorliegt.

31. Verfahren nach Anspruch 26, ferner umfassend:
Übermitteln des dritten Stromsignals von der dritten Rogowskispule zu der ersten Schutzvorrichtung über eine erste Verbindung;
Übermitteln des vierten Stromsignals von der vierten Rogowskispule zu der ersten Schutzvorrichtung über eine zweite Verbindung; und
Bestimmen, an der ersten Schutzvorrichtung und auf der Grundlage des dritten Stromsignals und des vierten Stromsignals, dass ein Fehler in Verbindung mit der zweiten Netzeinheit vorliegt.

32. Verfahren nach Anspruch 23, ferner umfassend:
Messen eines dritten Stroms durch einen dritten Leiter in dem Elektrosystem unter Einsatz einer dritten Rogowskispule, die entlang des dritten Leiters angeordnet ist;
Ausgeben eines dritten Stromsignals, das dem dritten Strom entspricht; und
Eingeben des dritten Stromsignals an der ersten Schutzvorrichtung.

33. Verfahren nach Anspruch 32, ferner umfassend das Bestimmen auf der Grundlage des ersten Stromsignals und des dritten Stromsignals, dass ein Fehler zwischen der ersten Rogowskispule und der dritten Rogowskispule vorliegt.

34. Verfahren nach Anspruch 32, ferner umfassend das Bestimmen auf der Grundlage des dritten Stromsignals und des zweiten Stromsignals, dass ein Fehler zwischen der dritten Rogowskispule und der zweiten Rogowskispule vorliegt.

## Revendications

1. Système de protection électrique (100) comprenant :
une première bobine de Rogowski (108 ; 408) positionnée pour détecter un premier courant et générer une première mesure de courant ;
une deuxième bobine de Rogowski (110 ; 420) positionnée pour détecter un deuxième courant et générer une deuxième mesure de courant, dans lequel une première zone de protection (104) est définie entre la première bobine de Rogowski (108 ; 408) et la deuxième bobine de Rogowski (110 ; 420) ; et
un premier dispositif de protection (116, 414) opérationnel pour déterminer l'existence d'un premier défaut qui est associé à un premier élément de circuit dans la première zone de protection (104) à partir de la différence entre la première mesure de courant et la deuxième mesure de courant.

2. Système selon la revendication 1, dans lequel la deuxième bobine de Rogowski (110) définit une deuxième zone de protection (118) contenant un deuxième élément de circuit, et le premier dispositif de protection (116) est opérationnel pour mettre en oeuvre un deuxième schéma de protection pour détecter un deuxième défaut associé au deuxième élément de circuit.

3. Système selon la revendication 2, dans lequel le deuxième schéma de protection comporte un schéma de protection contre les surintensités.

4. Système selon la revendication 3, dans lequel le premier dispositif de protection (116) est opérationnel pour intégrer une protection de la première zone de protection (104) et de la deuxième zone de protection (118).

5. Système selon la revendication 4, dans lequel le premier dispositif de protection (116) est opérationnel pour fournir une troisième zone de protection (120) qui sert de zone de protection de secours à la première zone de protection (104) et à la deuxième zone de protection (118).

6. Système selon la revendication 1, comprenant en outre un premier disjoncteur opérationnel pour recevoir une première instruction du premier dispositif de protection (116, 414) et interrompre le premier courant en réponse à la première instruction.

7. Système selon la revendication 6, dans lequel la première bobine de Rogowski (408), la deuxième bobine de Rogowski (420), le premier dispositif de protection (414), et le premier disjoncteur sont tous associés à une première unité de réseau (402) d'un système de réseau électrique (400).

8. Système selon la revendication 7, comprenant en outre :
une troisième bobine de Rogowski positionnée pour détecter un troisième courant et générer une troisième mesure de courant ;
une quatrième bobine de Rogowski positionnée pour détecter un quatrième courant et générer une quatrième mesure de courant, dans lequel une deuxième zone de protection est définie d'après un positionnement de la troisième bobine de Rogowski et de la quatrième bobine de Rogowski ; et
un second dispositif de protection opérationnel pour déterminer à partir de la troisième mesure de courant et de la quatrième mesure de courant, l'existence d'un deuxième défaut qui est associé à un deuxième élément de circuit dans la deuxième zone de protection.

9. Système selon la revendication 8, comprenant en outre un second disjoncteur opérationnel pour recevoir une seconde instruction provenant du second dispositif de protection et interrompre le troisième courant en réponse à la seconde instruction.

10. Système selon la revendication 9, dans lequel la troisième bobine de Rogowski, la quatrième bobine de Rogowski, le second dispositif de protection et le second disjoncteur sont tous associés à une deuxième unité de réseau (404) du système de réseau électrique (400).

11. Système selon la revendication 10, comprenant en outre un lien de communications (476) entre le premier dispositif de protection (414) et le second dispositif de protection (416).

12. Système selon la revendication 11, dans lequel la première unité de réseau (402) et la deuxième unité de réseau (404) sont connectées par l'intermédiaire d'une connexion de barre omnibus (462).

13. Système selon la revendication 12, dans lequel le premier dispositif de protection (414) et le second dispositif de protection (416) partagent la première mesure de courant, la deuxième mesure de courant, la troisième mesure de courant et la quatrième mesure de courant sur le lien de communications (476), et utilisent les mesures de courant pour déterminer qu'un défaut de barre omnibus associé à la connexion de barre omnibus (462) existe.

14. Système selon la revendication 12, dans lequel la troisième bobine de Rogowski, la quatrième bobine de Rogowski et le second disjoncteur sont connectés au premier dispositif de protection.

15. Système selon la revendication 14, dans lequel :
le premier dispositif de protection est opérationnel pour recevoir une notification de dysfonctionnement indiquant un dysfonctionnement du second dispositif de protection, et
le premier dispositif de protection est opérationnel pour recevoir la troisième mesure de courant et la quatrième mesure de courant et déterminer que le deuxième défaut existe d'après la mesure de courant.

16. Système selon la revendication 15, dans lequel le premier dispositif de protection est opérationnel pour actionner le second disjoncteur en réponse au deuxième défaut.

17. Système selon la revendication 1, comprenant en outre une troisième bobine de Rogowski positionnée pour détecter un troisième courant et générer une troisième mesure de courant, dans lequel une deuxième zone de protection est définie d'après un positionnement de la première bobine de Rogowski et de la troisième bobine de Rogowski, et une troisième zone de protection est définie d'après un positionnement de la deuxième bobine de Rogowski et de la troisième bobine de Rogowski.

18. Système selon la revendication 17, dans lequel le premier dispositif de protection est opérationnel pour déterminer à partir de la première mesure de courant et de la troisième mesure de courant qu'un deuxième défaut existe, lequel est associé à un second élément de circuit dans la deuxième zone de protection.

19. Système selon la revendication 17, dans lequel le premier dispositif de protection est opérationnel pour déterminer à partir de la deuxième mesure de courant et de la troisième mesure de courant qu'un troisième défaut existe, lequel est associé à un troisième élément de circuit dans la troisième zone de protection.

20. Système de protection électrique selon la revendication 1, dans lequel la première bobine de Rogowski (408) et la deuxième bobine de Rogowski (420) sont incluses dans un premier groupement de deux bobines ou plus, et comprenant en outre un deuxième groupement de deux bobines de Rogowski ou plus et un troisième groupement de deux bobines de Rogowski ou plus, dans lequel :
le premier groupement de bobines de Rogowski (408, 420) est opérationnel pour générer la première mesure de courant et la deuxième mesure de courant ;
le deuxième groupement de bobines de Rogowski (410, 422) est opérationnel pour générer des deuxièmes signaux de courant associés à une deuxième unité de réseau (404) du système de réseau électrique (400) ; et
le troisième groupement de bobines de Rogowski (412, 424) est opérationnel pour générer des troisièmes signaux de courant associés à une troisième unité de réseau (406) du système électrique (400).

21. Système de protection électrique selon la revendication 1, dans lequel la première bobine de Rogowski est associée à une artère primaire d'un système électrique et opérationnelle pour détecter un courant primaire dans l'artère primaire et le
premier dispositif de protection est opérationnel pour recevoir un premier signal de courant provenant de la première bobine de Rogowski, le dispositif de protection électrique comprenant en outre :
des bobines de Rogowski secondaires, associées chacune à une artère secondaire correspondante du système électrique et opérationnelles pour détecter un courant secondaire correspondant dans l'artère secondaire ;
des dispositifs de protection secondaire, chacun opérationnel pour recevoir un signal de courant secondaire provenant d'une bobine de Rogowski secondaire associée ; et
un lien de communication opérationnel pour transmettre le premier signal de courant et les signaux de courant secondaire entre le premier dispositif de protection et les dispositifs de protection secondaire.

22. Système de protection électrique selon la revendication 1, dans lequel :
la première bobine de Rogowski est positionnée le long d'un premier conducteur et opérationnelle pour mesurer un premier courant dans le premier conducteur pour générer la première mesure de courant, où le premier conducteur fait partie d'un système de four électrique à arc (EAF) ; et
le dispositif de protection est en outre opérationnel pour utiliser la première mesure de courant pour déterminer qu'un défaut existe dans le système EAF.

23. Procédé de protection d'un système électrique, le procédé comprenant :
la mesure d'un premier courant à travers un premier conducteur (102) dans un système électrique (100 ; 400) à l'aide d'une première bobine de Rogowski (108 ; 408) positionnée le long du premier conducteur (102) ;
la fourniture en sortie d'un premier signal de courant correspondant au premier courant ;
la mesure d'un deuxième courant à travers un deuxième conducteur (106) dans le système électrique (100 ; 400) à l'aide d'une deuxième bobine de Rogowski (110 ; 420) positionnée le long du deuxième conducteur (106) ;
la fourniture en sortie d'un deuxième signal de courant correspondant au deuxième courant ;
la fourniture du premier signal de courant et du deuxième signal de courant à un premier dispositif de protection (116 ; 414) ; et,
la détermination de l'existence d'un premier défaut qui est associé à un premier élément de circuit dans une première zone de protection (104) définie entre la première bobine de Rogowski (108 ; 408) et la deuxième bobine de Rogowski (110 ; 420) à partir de la différence entre la première mesure de courant et la deuxième mesure de courant.

24. Procédé selon la revendication 23, comprenant en outre :
la fourniture d'une protection contre les surintensités à un deuxième élément de circuit qui est positionné dans une deuxième zone de protection (118) du système électrique (100 ; 400) qui est définie par une position de la deuxième bobine de Rogowski (110 ; 420), à l'aide du premier dispositif de protection (116, 414).

25. Procédé selon la revendication 24, comprenant :
la fourniture d'une protection de secours dans une troisième zone de protection (120) qui comporte la première zone de protection (104) et la deuxième zone de protection (118), à l'aide du premier dispositif de protection (116).

26. Procédé selon la revendication 23, dans lequel le premier conducteur et le deuxième conducteur sont inclus dans une première unité de réseau (402) du système électrique (400), comprenant en outre :
la mesure d'un troisième courant à travers un troisième conducteur dans le système électrique (400) à l'aide d'une troisième bobine de Rogowski (410) positionnée le long du troisième conducteur ;
la fourniture en sortie d'un troisième signal de courant correspondant au troisième courant ;
la mesure d'un quatrième courant à travers un quatrième conducteur dans le système électrique (400) à l'aide d'une quatrième bobine de Rogowski (422) positionnée le long du quatrième conducteur ;
la fourniture en sortie d'un quatrième signal de courant correspondant au quatrième courant ; et
la fourniture d'un troisième signal de courant et du quatrième signal de courant à un second dispositif de protection (416).

27. Procédé selon la revendication 26, dans lequel le troisième conducteur et le quatrième conducteur sont inclus dans une deuxième unité de réseau (404) du système électrique (400).

28. Procédé selon la revendication 27, comprenant en outre la détermination, d'après le troisième signal de courant et le quatrième signal de courant, qu'un défaut associé à la deuxième unité de réseau (404) existe.

29. Procédé selon la revendication 27, dans lequel le premier dispositif de protection (414) et le second dispositif de protection (416) sont connectés par un lien de communications (476) ;
le système électrique comprend une barre omnibus de connexion (462) connectant la première unité de réseau (402) à la deuxième unité de réseau (404), et
la barre omnibus de connexion (462) est connectée au deuxième conducteur et au quatrième conducteur entre la première bobine de Rogowski (408) et la deuxième bobine de Rogowski (420).

30. Procédé selon la revendication 29, comprenant en outre :
la transmission du premier signal de courant et du deuxième signal de courant du premier dispositif de protection (414) au second dispositif de protection (416) ;
la transmission du troisième signal de courant et du quatrième signal de courant du second dispositif de protection (416) au premier dispositif de protection (414) ; et
la détermination qu'un défaut associé à la barre omnibus de connexion (462) existe, d'après le premier signal de courant, le deuxième signal de courant, le troisième signal de courant et le quatrième signal de courant.

31. Procédé selon la revendication 26, comprenant en outre :
la transmission du troisième signal de courant de la troisième bobine de Rogowski au premier dispositif de protection, à travers une première connexion ;
la transmission du quatrième signal de courant de la quatrième bobine de Rogowski au premier dispositif de protection, à travers une seconde connexion ; et
la détermination, au niveau du premier dispositif de protection et d'après le troisième signal de courant et le quatrième signal de courant, qu'un défaut associé à la deuxième unité de réseau existe.

32. Procédé selon la revendication 23, comprenant en outre :
la mesure d'un troisième courant à travers un troisième conducteur dans le système électrique à l'aide d'une troisième bobine de Rogowski positionnée le long du troisième conducteur ;
la fourniture en sortie d'un troisième signal de courant correspondant au troisième courant ; et
l'entrée du troisième signal de courant au niveau du premier dispositif de protection.

33. Procédé selon la revendication 32, comprenant en outre la détermination qu'un défaut existe entre la première bobine de Rogowski et la troisième bobine de Rogowski d'après le premier signal de courant et le troisième signal de courant.

34. Procédé selon la revendication 32, comprenant en outre la détermination qu'un défaut existe entre la troisième bobine de Rogowski et la deuxième bobine de Rogowski d'après le troisième signal de courant et le deuxième signal de courant.
